# EUROPÄISCHE PATENTSCHRIFT

(11) **EP 3 337 986 B1**
(45) Veröffentlichungstag und Bekanntmachung des Hinweises auf die Patenterteilung: **01.12.2021**
(21) Anmeldenummer: 16753903.0
(22) Anmeldetag: 17.08.2016
(51) Int. Cl.: F16B 37/08, B01F 11/00

(54) **APOTHEKEN-REZEPTURHERSTELLUNGS-KRUKEN-DECKEL, APOTHEKEN-REZEPTURHERSTELLUNGS-KRUKEN-BODEN, APOTHEKEN-REZEPTURHERSTELLUNGS-VORRICHTUNGS-HUBARM SOWIE APOTHEKEN-REZEPTURHERSTELLUNGS-VORRICHTUNG DAMIT**
PHARMACY FORMULATION PRODUCTION JAR LID, PHARMACY FORMULATION PRODUCTION JAR BOTTOM, PHARMACY FORMULATION PRODUCTION DEVICE LIFTING ARM, AND PHARMACY FORMULATION PRODUCTION DEVICE THEREWITH
COUVERCLE DE BOCAL DE PRODUCTION DE FORMULATION PHARMACEUTIQUE, FOND DE BOCAL DE PRODUCTION DE FORMULATION PHARMACEUTIQUE, BRAS DE LEVAGE DE DISPOSITIF DE PRODUCTION DE FORMULATION PHARMACEUTIQUE ET DISPOSITIF DE PRODUCTION DE FORMULATION PHARMACEUTIQUE ASSOCIÉ

(30) Priorität: 20.08.2015 DE 102015113822
(43) Veröffentlichungstag der Anmeldung: 27.06.2018
(73) Patentinhaber: Gako Deutschland GmbH, 96110 Schesslitz (DE)
(72) Erfinder: KONIETZKO, Matthias, 96049 Bamberg (DE)
(74) Vertreter: Schmitt-Nilson Schraud Waibel Wohlfrom Patentanwälte Partnerschaft mbB
(86) Internationale Anmeldenummer: PCT/EP2016/069509
(87) Internationale Veröffentlichungsnummer: WO 2017/029322

(56) Entgegenhaltungen:
- WO-A1-2014/088600
- DE-A1- 19 735 539
- DE-A1- 19 735 539
- DE-A1-102010 044 227
- DE-A1-102010 044 227
- DE-A1-102012 110 986
- DE-A1-102012 110 986
- US-A- 2 828 662
- US-A- 2 828 662
- US-A1- 2002 154 568
- US-A1- 2002 154 568
- US-A1- 2004 057 811
- US-A1- 2004 057 811
- US-B1- 7 293 936
- US-B1- 7 293 936

## Beschreibung

Die Erfindung betrifft einen Apotheken-Rezepturherstellungs-Kruken-Deckel, einen Apotheken-Rezepturherstellungs-Kruken-Boden, einen Apotheken-Rezepturherstellungs-Vorrichtungs-Hubarm sowie eine Apotheken-Rezepturherstellungs-Vorrichtung damit.

Aus dem deutschen Gebrauchsmuster DE 297 24 902 U1 ist eine Vorrichtung zum Rühren bzw. zum Herstellen von Mischungen oder dergleichen in einem Rührgefäß bekannt. Obgleich sich diese Vorrichtung im täglichen Apotheken-Alltag zur Herstellung von pharmazeutischen Individual-Produkten bewährt hat, hat der Erfinder des vorliegenden Gegenstands erkannt, dass die Handhabung von Kruken an einer solchen Vorrichtung umständlich und zeitaufwendig ist.

Es ist daher eine Aufgabe der vorliegenden Erfindung, eine Apotheken-Rezepturherstellungs-Kruke und Bestandteile hierfür, einen Apotheken-Rezepturherstellungs-Vorrichtungs-Hubarm, sowie eine Apotheken-Rezepturherstellungs-Vorrichtung damit anzugeben, mit denen eine einfachere und schnellere Handhabung ermöglicht wird. Insbesondere soll eine einfache und schnell durchzuführende Befestigung der Apotheken-Rezepturherstellungs-Kruke an dem Apotheken-Rezepturherstellungs-Vorrichtungs-Hubarm und ebenso ein einfaches und schnell durchzuführendes Lösen der Apotheken-Rezepturherstellungs-Kruke von dem Apotheken-Rezepturherstellungs-Vorrichtungs-Hubarm erreicht werden.

Diese Aufgabe wird durch den Gegenstand der unabhängigen Patentansprüche gelöst. Vorteilhafte Weiterbildungen ergeben sich aus den abhängigen Ansprüchen.

Ein erfindungsgemäßer Apotheken-Rezepturherstellungs-Kruken-Deckel oder Apotheken-Rezepturherstellungs-Kruken-Boden einer Apotheken-Rezepturherstellungs-Kruke zum Herstellen eines pharmazeutischen Individual-Produkts in einer Apotheke ist zum aufschraubenden, lösbaren Schnellbefestigen an einem Apotheken-Rezepturherstellungs-Vorrichtungs-Hubarm für eine Apotheken-Rezepturherstellungs-Vorrichtung zum Herstellen eines pharmazeutischen Individual-Produkts ausgebildet und umfasst
eine Deckelplatte bzw. eine Bodenplatte,
wobei die Deckelplatte bzw. Bodenplatte einen im Wesentlichen zylindrischen, sich von der Deckelplatte nach oben bzw. sich von der Bodenplatte nach unten erstreckenden und innen hohlen, einen Zugang zu dem unterhalb der Deckelplatte bzw. oberhalb der Bodenplatte liegenden Bereich der Apotheken-Rezepturherstellungs-Kruke erlaubenden Befestigungsfortsatz zur lösbaren Befestigung des Apotheken-Rezepturherstellungs-Kruken-Deckels an einem Hubarm der Apotheken-Rezepturherstellungs-Vorrichtung aufweist und
wobei der Befestigungsfortsatz an seiner Außenfläche wenigstens zwei in Umfangsrichtung voneinander beabstandete Außengewindebereiche aufweist.

Ein erfindungsgemäßer Apotheken-Rezepturherstellungs-Vorrichtungs-Hubarm für eine Apotheken-Rezepturherstellungs-Vorrichtung zum Herstellen eines pharmazeutischen Individual-Produkts ist zum aufschraubenden, lösbaren Schnellbefestigen eines Apotheken-Rezepturherstellungs-Kruken-Deckels der oben beschriebenen Art, eines Apotheken-Rezepturherstellungs-Kruken-Bodens der oben beschriebenen Art, eines Apotheken-Rezepturherstellungs-Kruken-Adapters der oben beschriebenen Art, oder einer Apotheken-Rezepturherstellungs-Kruke nach der im folgenden beschriebenen Art daran ausgebildet und umfasst
einen im Wesentlichen länglichen Grundkörper mit einem an oder nahe dem vorderen Längsende des Grundkörpers vorgesehenen Kruken-Befestigungsfortsatz-Befestigungsbereich für einen Befestigungsfortsatz eines Apotheken-Rezepturherstellungs-Kruken-Deckels, eines Apotheken-Rezepturherstellungs-Kruken-Bodens, eines Apotheken-Rezepturherstellungs-Kruken-Adapters oder einer Apotheken-Rezepturherstellungs-Kruke;
wobei der Kruken-Befestigungsfortsatz-Befestigungsbereich als sich von der Unterseite zur Oberseite des Grundkörpers erstreckende Aussparung ausgebildet ist; und
wobei der Kruken-Befestigungsfortsatz-Befestigungsbereich an seiner Innenfläche wenigstens zwei in Umfangsrichtung voneinander beabstandete Innengewindebereiche aufweist.

Gemäß einer der Erfindung zugrundeliegenden Erkenntnis ist die Handhabung von herkömmlichen Apotheken-Rezepturherstellungs-Kruken an herkömmlichen Apotheken-Rezepturherstellungs-Vorrichtungen deswegen umständlich und zeitaufwändig, weil die bereits mit den zu vermischenden Komponenten und daher schweren Kruken an dem Hubarm befestigt werden, indem sie über einen sehr langen Drehweg mit ihrem Gewinde in das Gewinde des Hubarms eingedreht werden müssen. Dies erfordert einen erheblichen Kraftaufwand und eine relativ lange Zeitspanne zum Befestigen. Gleiches gilt für das Lösen der Apotheken-Rezepturherstellungs-Kruke nach erfolgter Erstellung des Individualprodukts, insbesondere nach erfolgtem Mischvorgang. Zudem ergibt sich häufig das Problem des Verkantens beim Einschrauben der Apotheken-Rezepturherstellungs-Kruke in den Hubarm, was die Zeitspanne, die zum Befestigen benötigt wird, weiter verlängert, und im schlimmsten Fall sogar das oder die Gewinde beschädigen kann.

Gemäß einem Grundgedanken der vorliegenden Erfindung hat der Befestigungsfortsatz der Apotheken-Rezepturherstellungs-Kruke, bei einem Apotheken-Rezepturherstellungs-Kruken-Deckel oder einem Apotheken-Rezepturherstellungs-Kruken-Boden, bzw. der Basiskörper, wenigstens zwei in Umfangsrichtung voneinander beabstandete Außengewinde-Bereiche, und der Apotheken-Rezepturherstellungs-Vorrichtungs-Hubarm hat an der Innenfläche seines Kruken-Befestigungsfortsatz-Befestigungsbereichs wenigstens zwei in Umfangsrichtung voneinander beabstandete Innengewinde-Bereiche.

Der erfindungsgemäße Apotheken-Rezepturherstellungs-Vorrichtungs-Hubarm kann einteilig ausgebildet sein. Bei der einteiligen Form ist der Kruken-Befestigungsfortsatz-Befestigungsbereich integraler Bestandteil des Apotheken-Rezepturherstellungs-Vorrichtungs-Hubarms.

Der erfindungsgemäße Apotheken-Rezepturherstellungs-Vorrichtungs-Hubarm kann auch zweiteilig ausgebildet sein. Bei der zweiteiligen Form weist der Apotheken-Rezepturherstellungs-Vorrichtungs-Hubarm an oder nahe dem vorderen Längsende des Grundkörpers eine Aussparung mit einem darin befestigten oder befestigbaren Einsetzstück auf, die den erfindungsgemäßen Kruken-Befestigungsfortsatz-Befestigungsbereich aufweist. Das Einsetzstück wird klemmend, schraubend, auf einer in dem unteren Bereich der Aussparung ausgebildeten Anschlagsfläche aufliegend oder auf andere Art und Weise in der zylindrischen Aussparung positioniert und fixiert.

Die Apotheken-Rezepturherstellungs-Kruke kann somit in vertikaler Richtung in den Kruken-Befestigungsfortsatz-Befestigungsbereich eingeschoben werden, und zwar in einer Drehposition, bei der die Außengewinde-Bereiche der Apotheken-Rezepturherstellungs-Kruke bzw. des Kruken-Deckels, des Kruken-Bodens oder des Kruken-Adapters an den gewindefreien Zwischenbereichen zwischen den Innengewinde-Bereichen des Kruken-Befestigungsfortsatz-Befestigungsbereichs liegen, und dann kann das eigentliche Befestigen erfolgen, in dem die Apotheken-Rezepturherstellungs-Kruke entlang eines Drehwegs soweit gedreht wird, bis deren Außengewinde-Bereiche in die Innengewinde-Bereiche des Kruken-Befestigungsfortsatz-Befestigungsbereichs eingreifen. Dieser Drehweg ist 90° oder geringer, je nachdem, wie viele in Umfangsrichtung voneinander beabstandete Außengewinde-Bereiche und Innengewinde-Bereiche vorgesehen sind, und je nachdem, über welchen Umfangswinkelbereich sich diese Außengewinde-Bereiche und Innengewinde-Bereiche erstrecken. In jedem Fall ist der Drehweg signifikant geringer ausgebildet als der Drehweg bei konventionellen, durchgängigen Gewinden, wo häufig mehrere Volldrehungen um jeweils 360° durchgeführt werden mussten, bis eine zuverlässige Befestigung der Apotheken-Rezepturherstellungs-Kruke gegenüber dem Hubraum erreicht worden ist.

Dadurch ergibt sich ein Schnell-Befestigen und analog dazu ein Schnell-Lösen einer erfindungsgemäßen Apotheken-Rezepturherstellungs-Kruke an einem erfindungsgemäßen Hubarm. Es muss weniger Kraft zum Drehen, zum Heben und zum Halten der Apotheken-Rezepturherstellungs-Kruke aufgewendet werden, als bei konventionellen Kruken und Hubarmen.

Zudem wird dadurch, dass die Apotheken-Rezepturherstellungs-Kruke, insbesondere der Kruken-Deckel, der Kruken-Boden oder der Kruken-Adapter zunächst in vertikaler Richtung, insbesondere bis zu einem Anschlag, in den Hubarm bzw. in dessen Kruken-Befestigungsfortsatz-Befestigungsbereichs eingeschoben wird, und erst danach die Drehbewegung erfolgt, die Gefahr des Verkantens signifikant reduziert, was zudem Zeit spart und die Gewinde schont.

Unter dem Begriff Kruken sind Mischgefäße zu verstehen, die speziell zum Herstellen von pharmazeutischen Individual-Produkten in Apotheken verwendet werden. Bei solchen pharmazeutischen Individual-Produkten kann es sich um Salben, halbfeste Zubereitungen, Pasten, Cremes, Gele, Emulsionen, Augentropfen, Tinkturen, Tabletten, Kapseln oder Tees handeln. Üblicherweise haben solche Kruken keinen Hals bzw. keine Verengung an der Oberseite, sondern weisen einen zylindrischen Innenraum auf, sodass die darin hergestellten pharmazeutischen Individual-Produkte auf einfache Weise z. B. mit einem Spatel komplett entnommen werden.

Es gibt unterschiedliche Kruken-Grundformen.

Bei einer ersten Kruken-Grundform umfasst die Kruke einen zylindrischen Grundkörper, in dessen unterem Ende ein beweglicher Boden angeordnet ist zum Herausdrücken des Individual-Produkts, der den Innenbereich des zylindrischen Grundkörpers vom Außenbereich trennt und der an seinem gegenüberliegenden oberen Ende einen Befestigungsbereich für einen Apotheken-Rezepturherstellungs-Kruken-Deckel der hier beschriebenen Art aufweist.

Bei einer zweiten Kruken-Grundform umfasst die Kruke einen zylindrischen Grundkörper, an dessen unteren Ende ein Befestigungsbereich für einen Apotheken-Rezepturherstellungs-Kruken-Boden der hier beschriebenen Art angeordnet ist und der an dem gegenüberliegenden oberen Ende eine fest mit dem zylindrischen Grundkörper verbundene Deckelplatte mit Entnahmeöffnung aufweist, die mit einem separaten Deckel verschließbar ist. Der Apotheken-Rezepturherstellungs-Kruken-Boden kann nach der Herstellung des Individual-Produkts von dem zylindrischen Grundkörper gelöst und durch einen in axialer Richtung verschiebbaren Boden ausgetauscht werden.

Ein Unterschied zwischen diesen beiden Kruken-Grundformen ist darin zu sehen, dass bei der ersten Kruken-Grundform die Zugabe der Inhaltsstoffe für das herzustellende Individual-Produkt von oben durch die obere Öffnung der Kruke unter vorherigem Abschrauben des Krukendeckels erfolgt, wohingegen bei der zweiten Kruken-Grundform die Zugabe der Inhaltsstoffe für das herzustellende Individual-Produkt durch die untere Öffnung, nach vorherigem Abschrauben des Krukenbodens und nach vorherigem Umdrehen der Kruke, so dass deren Bodenöffnung nach oben weist, erfolgt

Gemäß einem weiteren Unterschied der beiden Kruken-Grundformen ist bei der ersten Kruken-Grundform der Deckel abnehmbar, weil sonst ja eine Zugabe der Inhaltsstoffe durch die obere Öffnung der Kruke nicht oder nur schlecht möglich ist, wohingegen bei der zweiten Kruken-Grundform, bei der ja die Zugabe der Inhaltsstoffe durch die Bodenöffnung erfolgt, die Deckelplatte integral mit der zylindrischen Wand des Grundkörpers verbunden ist und eine durch einen zusätzlichen Deckel verschließbare und öffenbare Entnahmeöffnung aufweist.

Bei der ersten Kruken-Grundform ist der Kruken-Befestigungsfortsatz an der Oberseite der Kruke angeordnet und Teil des Krukendeckels, wohingegen bei der zweiten Kruken-Grundform der Kruken-Befestigungsfortsatz an der Unterseite der Kruke angeordnet und Teil des Krukenbodens ist.

Bei beiden Kruken-Grundformen erfolgt die Entnahme des fertig hergestellten Individualprodukts durch die Oberseite der Kruke. Bei der ersten Kruken Grundform erfolgt die Entnahme durch den Befestigungsfortsatz, der Teil des abnehmbaren Krukendeckels ist, und bei der zweiten Kruken-Grundform durch die Entnahmeöffnung in der integral mit dem zylindrischen Grundkörper ausgebildeten Deckelplatte.

In beiden Fällen wird der Krukenboden in Richtung zu der Oberseite der Kruke, bei der ersten Kruken-Grundform zu dem Befestigungs-Fortsatz und bei der zweiten Kruken-Grundform zu der Entnahmeöffnung hin verschoben und somit das Individual-Produkt nach Art einer Tube heraus gedrückt.

Bei einer erfindungsgemäßen Apotheken-Rezepturherstellungs-Kruke mit einem erfindungsgemäßen Apotheken-Rezepturherstellungs-Kruken-Deckel erfolgt das Befestigen gegenüber dem Hubarm wie folgt:
Zunächst werden die Inhaltsstoffe des Individual-Produkts in der jeweiligen Zusammensetzung in die Apotheken-Rezepturherstellungs-Kruke eingefüllt. Danach wird ein Rührwerkzeug, das mit einem Rührstab verbunden ist, in die Apotheken-Rezepturherstellungs-Kruke eingeführt und kann auf den Inhaltsstoffen aufliegen oder in diese eintauchen. Nun wird der noch nicht mit der Rühreinheit verbundene Rührstab durch den Befestigungsfortsatz des Apotheken-Rezepturherstellungs-Kruken-Deckel geführt und der Kruken-Deckel wird bis zu dem Kruken-Behältnis geführt und auf dieses aufgesetzt oder aufgeschraubt oder auf andere geeignete Weise damit befestigt. Die Gesamtanordnung aus Apotheken-Rezepturherstellungs-Kruken-Behältnis, Apotheken-Rezepturherstellungs-Kruken-Deckel, Rührwerkzeug und Rührstab wird dann in den Kruken-Befestigungsfortsatz-Befestigungsbereich des Hubarms in vertikaler Richtung eingeführt, und zwar in einer Drehposition in der die Außengewindebereiche fluchtend mit den gewindefreien Innenflächen-Zwischenbereichen des Kruken-Befestigungsfortsatz-Befestigungsbereichs des Apotheken-Rezepturherstellungs-Vorrichtungs-Hubarms angeordnet sind. Danach rastet der Rührstab oben in die Rühreinheit der Apotheken-Rezepturherstellungs-Vorrichtung ein. Gleichzeitig oder anschließend erfolgt das eigentliche Befestigen, indem die Apotheken-Rezepturherstellungs-Kruke entlang eines Drehwegs soweit gedreht wird, bis deren Außengewindebereiche in die Innengewindebereiche des Kruken-Befestigungsfortsatz-Befestigungsbereichs eingreifen. Dieser Drehweg ist 90° oder geringer, je nachdem wie viele in Umfangsrichtung voneinander beabstandete Außengewinde-Bereiche und Innengewinde-Bereiche vorgesehen sind, und je nachdem über welchen Umfangswinkelbereich sich diese Außengewinde-Bereiche und Innengewinde-Bereiche erstrecken.

Beim Befestigen einer Apotheken-Rezepturherstellungs-Kruke mit einem Apotheken-Rezepturherstellungs-Kruken-Boden einer Kruke der zweiten Kruken-Grundform an dem Hubarm wird ähnlich vorgegangen. Hierbei ist die zu verwenden. Das Kruken-Behältnis wird auf die Entnahmeöffnung und einem mit dieser Öffnung verbundenen Verschluss gestellt. Die Inhaltsstoffe des Individual-Produkts werden in das Kruken-Behältnis eingefüllt und das Rührwerkzeug, das mit dem Rührstab verbunden ist, wird in das Apotheken-Rezepturherstellungs-Kruken-Behältnis eingeführt und kann auf den Inhaltsstoffen aufliegen oder in diese eintauchen. Nun wird der noch nicht mit der Rühreinheit verbundene Rührstab durch den Befestigungsfortsatz des Apotheken-Rezepturherstellungs-Kruken-Bodens geführt und der Kruken-Boden wird bis zu dem Kruken-Behältnis geführt und in dieses eingesetzt oder eingeschraubt oder auf andere geeignete Weise damit befestigt. Die Gesamtanordnung aus Apotheken-Rezepturherstellungs-Kruken-Behältnis, Apotheken-Rezepturherstellungs-Kruken-Boden, Rührwerkzeug und Rührstab wird dann in den Kruken-Befestigungsfortsatz-Befestigungsbereich des Hubarms in vertikaler Richtung eingeführt, und zwar in einer Drehposition in der die Außengewindebereiche fluchtend mit den gewindefreien Innenflächen-Zwischenbereichen des Kruken-Befestigungsfortsatz-Befestigungsbereichs des Apotheken-Rezepturherstellungs-Vorrichtungs-Hubarms angeordnet sind. Danach rastet der Rührstab oben in die Rühreinheit der Apotheken-Rezepturherstellungs-Vorrichtung ein. Gleichzeitig oder anschließend erfolgt das eigentliche Befestigen, in dem die Apotheken-Rezepturherstellungs-Kruke entlang eines Drehwegs soweit gedreht wird, bis deren Außengewindebereiche in die Innengewindebereiche des Kruken-Befestigungsfortsatz-Befestigungsbereichs eingreifen. Dieser Drehweg ist 90° oder geringer, je nachdem wie viele in Umfangsrichtung voneinander beabstandete Außengewinde-Bereiche und Innengewinde-Bereiche vorgesehen sind, und je nachdem über welchen Umfangswinkelbereich sich diese Außengewinde-Bereiche und Innengewinde-Bereiche erstrecken. Anschließend wird die Kruke vom Apotheken-Rezepturherstellungs-Vorrichtungs-Hubarm entlang eines Drehwegs gelöst, der eine entgegengesetzte Drehrichtung zum Befestigen aufweist. Der obenliegende Kruken-Boden wird von dem Kruken-Behältnis gelöst und das Rührwerkzeug samt Rührstab werden aus dem Kruken-Behältnis entfernt. Im Anschluss wird ein beweglicher Kruken-Boden anstelle des erfindungsgemäßen Kruken-Bodens in das Kruken-Behältnis eingefügt. Nachdem die Kruke nun in eine aufrechte Position gedreht wurde, bei der die Entnahmeöffnung nach oben zeigt, kann mit der Unterstützung des Kruken-Bodens das Individual-Produkt aus der Kruke entnommen werden.

Bei dem Verwenden eines erfindungsgemäßen Apotheken-Rezepturherstellungs-Kruken-Adapters wird zunächst eine herkömmliches Kruken-Behältnis mit Inhaltsstoffen des Individual-Produkts befüllt. Dann wird das Rührwerkzeug in das Kruken-Behältnis zusammen mit dem Rührstab eingeführt und kann auf den Inhaltsstoffen aufliegen oder in diese eintauchen. Nun wird der Rührstab durch den Befestigungsfortsatz eines herkömmlichen Kruken-Deckels hindurchgeführt und der Kruken-Deckel wird in axialer Richtung bis zum Kruken-Behältnis geschoben und auf dem Kruken-Behältnis aufgesetzt, damit verschraubt oder in sonstiger Weise befestigt wird. Zuvor oder danach kann der Kruken-Adapter auf den Befestigungsfortsatz des Kruken-Deckels aufgeschraubt werden. In dem Fall, dass der Kruken-Adapter vor dem Durchführen des Rührstabs durch den Befestigungsfortsatz auf diesen aufgeschraubt wird, entfällt das anschließend erforderliche erneute Durchführen des Rührstabs durch den Kruken-Adapter. Diese Gesamtanordung aus Kruken-Behältnis, Kruken-Deckel mit auf dessen Befestigungsfortsatz aufgeschraubten Apotheken-Rezepturherstellungs-Kruken-Adapter, Rührwerkzeug und Rührstab wird dann so in vertikaler Richtung in den erfindungsgemäßen Apotheken-Rezepturherstellungs-Vorrichtungs-Hubarm eingeführt, dass die Außengewindebereiche des Kruken-Adapters fluchtend mit den gewindefreien Bereichen des Kruken-Befestigungsfortsatz-Befestigungsbereichs ausgerichtet sind, und dann wird der Kruken-Adapter mit Kruke entlang eines Drehwegs um einen Drehwinkel von 90° oder weniger an dem Kruken-Befestigungsfortsatz-Befestigungsbereich schnellbefestigt, so dass die Außengewindebereiche des Kruken-Adapters in die Innengewindebereiche des Kruken-Befestigungsfortsatz-Befestigungsbereichs eingreifen.

Das Lösen derApotheken-Rezepturherstellungs-Kruke von dem Apotheken-Rezepturherstellungs-Vorrichtungs-Hubarm erfolgt in entgegengesetzter Reihenfolge zum Befestigen der Apotheken-Rezepturherstellungs-Kruke.

Die Deckelplatte bzw. Bodenplatte weist einen im Wesentlichen zylindrischen, sich von der Deckelplatte nach oben bzw. sich von der Bodenplatte nach unten erstreckenden und innen hohlen, einen Zugang zu dem unterhalb der Deckelplatte bzw. oberhalb der Bodenplatte liegenden Bereich der Apotheken-Rezepturherstellungs-Kruke erlaubenden Befestigungsfortsatz zur lösbaren Befestigung des Kruken-Deckels an dem Hubarm der Apotheken-Rezepturherstellungs-Vorrichtung auf. An diesem Befestigungsfortsatz befinden sich die Außengewindebereiche mit denen eine schnelle und mühelose Befestigung der Apotheken-Rezepturherstellungs-Kruken an einem Apotheken-Rezepturherstellungs-Vorrichtungs-Hubarm einer Apotheken-Rezepturherstellungs-Vorrichtung möglich ist.

Gemäß einer ersten Ausführungsform des Apotheken-Rezepturherstellungs-Kruken-Deckels, Apotheken-Rezepturherstellungs-Kruken-Bodens oder Apotheken-Rezepturherstellungs-Kruken-Adapters weisen die Außengewindebereiche jeweils mehrere, insbesondere 2 bis 10, in Axialrichtung gesehen, äquidistant übereinander angeordnete Gewindewandungen mit gleicher Steigung auf. Die mehreren übereinander angeordneten Gewindewandungen ermöglichen, dass der Kruken-Deckel, der Kruken-Boden oder der Kruken-Adapter eine sichere Befestigung an dem Kruken-Befestigungsfortsatz-Befestigungsbereich des Hubarms gewährleistet, wobei 2 Gewindewandungen bereits für eine ausreichend sichere Befestigung in dem Kruken-Befestigungsfortsatz-Befestigungsbereich des erfindungsgemäßen Hubarms genügen.

Zur besseren Lesbarkeit werden im folgenden die Begriffe Kruken-Deckel als Kurzform von Apotheken-Rezepturherstellungs-Kruken-Deckel und Kruken-Boden als Kurzform von Apotheken-Rezepturherstellungs-Kruken-Boden verwendet.

Gemäß einer weiteren Ausführungsform des Kruken-Deckels oder des Kruken-Bodens ist zwischen jeweils zwei in Umfangsrichtung voneinander beabstandeten Außengewindebereichen ein gewindefreier Außenflächen-Zwischenbereich angeordnet. Diese Außenflächen-Zwischenbereiche weisen in radialer Richtung gesehen eine geringeren Abstand zu der Mit-telachse auf, als die Außengewindebereiche. Daher kann der korrespondierende Innengewindebereich des Kruken-Befestigungsfortsatz-Befestigungsbereichs des erfindungsgemäßen Hubarms schnell , insbesondere in vertikaler Richtung eingeschoben werden und anschließend verdreht werden.

Gemäß einer weiteren Ausführungsform umfasst der Kruken-Deckel oder der Kruken-Boden weiterhin drei in Umfangsrichtung voneinander beabstandete Außengewindebereiche mit jeweils dazwischen angeordneten, gewindefreien Außenflächen-Zwischenbereichen. Diese Ausführungsform erlaubt eine besonders einfache und schnelle Befestigung mit einem nur geringen Drehweg.

Gemäß einer weiteren Ausführungsform des Kruken-Deckels oder des Kruken-Bodens nehmen die Außengewindebereiche jeweils einen Winkelbereich von 10 - 90°, insbesondere 50 - 70° ein. Auch diese Ausführungsform erlaubt eine besonders einfache und schnelle Befestigung mit einem nur geringen Drehweg.

Gemäß einer weiteren Ausführungsform des Kruken-Deckels oder des Kruken-Bodens weist wenigstens einer der Außengewindebereiche einen umfangsmäßig mittleren Außengewindebereichs-Abschnitt und zwei zu beiden Seiten in Umfangsrichtung daran anschließende, umfangsmäßig äußere Außengewindebereichs-Abschnitte auf. Der mittlere Außengewindebereich ermöglicht einen sicheren Eingriff des Außengewindebereichs in den Innengewindebereich des Kruken-Befestigungsfortsatz-Befestigungsbereichs und die äußeren Außengewindebereichs-Abschnitte erlauben, dass an diesen jeweils ein Innengewindebereich des Kruken-Befestigungsfortsatz-Befestigungsbereich leicht vorbeibewegbar ist.

Gemäß einer weiteren Ausführungsform des Kruken-Deckels oder des Kruken-Bodens weist wenigstens eine Gewindewandung im umfangsmäßig mittleren Außengewindebereichs-Abschnitt eine gleichbleibende Höhe, gemessen radial zur gekrümmten Ebene der Außenfläche des Befestigungsfortsatzes oder zu dem Gewindegangboden auf. Somit kann ein besonders sicherer Eingriff des mittleren Außengewindebereichs-Abschnitts mit einem korrespondierenden Innengewindebereich des Kruken-Befestigungsfortsatz-Befestigungsbereichs des erfindungsgemäßen Hubarms gewährleistet werden.

Gemäß einer weiteren Ausführungsform des Kruken-Deckels oder des Kruken-Bodens nimmt die Höhe der Gewindewandungen in den umfangsmäßig äußeren Außengewindebereichs-Abschnitten, gemessen radial zur gekrümmten Ebene der Außenfläche des Befestigungsfortsatzes oder zu dem Gewindegangboden, vom umfangsmäßig inneren, zum mittleren Außengewindebereichs-Abschnitt gerichteten Ende zum umfangsmäßig äußeren Ende des jeweiligen äußeren Außengewindebereichs-Abschnitts ab, und nimmt insbesondere so ab, dass das umfangsmäßig äußere Ende des jeweiligen äußeren Außengewindebereichs-Abschnitts in die gekrümmte Ebene der Außenfläche des Befestigungsfortsatzes übergeht und/oder dessen Höhe, gemessen radial zur gekrümmten Ebene der Außenfläche des Befestigungsfortsatzes, Null ist.

Somit können die Außengewindebereiche einfach und sicher mit den jeweils korrespondierenden Innengewindebereichen des Kruken-Befestigungsfortsatz-Befestigungsbereichs des erfindungsgemäßen Hubarms in Eingriff gebracht werden und Verkantungen können weitestgehend vermieden werden.

Gemäß einer weiteren Ausführungsform des Kruken-Deckels oder des Kruken-Bodens weist einer der Außengewindebereiche, insbesondere alle Außengewindebereiche, wenigstens eine Gewindewandung mit gleichbleibender Höhe, gemessen radial zur gekrümmten Ebene der Außenfläche des Befestigungsfortsatzes oder zu dem Gewindegangboden, auf. Selbstverständlich können auch alle Gewindewandungen eines oder aller Außengewindebereiche jeweils eine gleichbleibender Höhe, gemessen radial zur gekrümmten Ebene der Außenfläche des Befestigungsfortsatzes oder zu dem Gewindegangboden, aufweisen. Diese Ausführungsform erlaubt eine besonders sichere Befestigung.

Gemäß einer weiteren vorteilhaften Ausführungsform des Kruken-Deckels oder des Kruken-Bodens ist ein Außengewindebereich als Paar von zwei in Umfangsrichtung unterbrochenen Außengewindebereichssegmenten ausgebildet.

Gemäß einer weiteren Ausführungsform des Kruken-Deckels oder des Kruken-Bodens sind die gewindefreien Außenflächen-Zwischenbereiche Zylindersegment-förmig ausgebildet oder weisen eine gekrümmte Form, gesehen in einem radialen Querschnitt, auf, oder wobei die gewindefreien Außenflächen-Zwischenbereiche jeweils eine parallel zur Längsachse des Befestigungsfortsatzes verlaufende Ebene bilden, welche die umfangsmäßig äußeren Enden von jeweils benachbarten Außengewindebereichen miteinander verbindet. Dies erlaubt ein schnelles und Verkantungs-freies Einschieben des Kruken-Deckels oder des Kruken-Bodens mit dem Kruken-Befestigungsfortsatz-Befestigungsbereich des Apotheken-Rezepturherstellungs-Vorrichtungs-Hubarms, insbesondere in vertikaler Richtung.

Gemäß einer weiteren Ausführungsform des Kruken-Deckels oder des Kruken-Bodens sind die Außengewindebereiche jeweils, in Umfangsrichtung gesehen, äquidistant zueinander angeordnet und nehmen jeweils gleich große Winkelbereiche ein, oder ein Außengewindebereich nimmt, in Umfangsrichtung gesehen, einen geringeren Winkelbereich ein, als wenigstens ein weiterer Außengewindebereich. Diese Ausführungsform erlaubt eine besonders einfache und schnelle Befestigung mit einem nur geringen Drehweg.

Gemäß der Erfindung weist der Kruken-Deckel oder der Kruken-Boden eine Positionierungs-Markierung auf der Oberseite der Deckelplatte bzw. auf der Unterseite der Bodenplatte, zur Angabe der rotationsmäßigen Einbring-Position des Apotheken-Rezepturherstellungs-Kruken-Deckels oder Apotheken-Rezepturherstellungs-Kruken-Bodens gegenüber einem Apotheken-Rezepturherstellungs-Vorrichtungs-Hubarm auf. Diese Positionierungs-Markierung stellt sicher, dass der Befestigungsfortsatz problemlos und schnell in der richtigen rotationsmäßigen Einbring-Position in den Kruken-Befestigungsfortsatz-Befestigungsbereich des Hubarms eingeschoben werden kann.

Gemäß einer weiteren Ausführungsform weist der Kruken-Deckel oder der Kruken-Boden einen umlaufenden, sich von der Deckelplatte nach unten erstreckenden Deckelrand mit Innengewinde, zum aufschraubenden Befestigen an einem Apotheken-Rezepturherstellungs-Kruken-Behältnis, bzw. einen umlaufenden, sich von der Bodenplatte nach oben erstreckenden Bodenrand mit Innengewinde, zum aufschraubenden Befestigen an einem Apotheken-Rezepturherstellungs-Kruken-Behältnis auf. Dadurch kann der Kruken-Deckel, bei der ersten Kruken-Grundform bzw. der Kruken-Boden bei der zweiten Kruken-Grundform schnell und sicher an dem Kruken-Behältnis befestigt und wieder von diesem gelöst werden.

Gemäß einer weiteren vorteilhaften Ausführungsform des Kruken-Deckels oder des Kruken-Bodens weist der Deckelplattenrand bzw. der Bodenplattenrand eine Erhöhung auf. Dieser Deckelplattenrand bzw. Bodenplattenrand bildet eine Anschlagsfläche für die Unterseite des Hubarms. Wenn der Deckelplattenrand bzw. Bodenplattenrand an der Unterseite des Hubarms anschlägt ist die endgültige Befestigungsposition erreicht.

Gemäß einer weiteren vorteilhaften Ausführungsform des Kruken-Bodens weist der Befestigungsfortsatz einen unteren, im Wesentlichen zylindrischen Befestigungsbereich und einen oberen, im Wesentlichen zylindrischen Sockelbereich größeren Durchmessers auf, wobei am Übergang zwischen dem oberen Sockelbereich und dem unteren Befestigungsbereich eine nach unten gerichtete, insbesondere ringförmige Anschlagsfläche ausgebildet ist, die einen Anschlag für eine Anschlagsfläche eines Kruken-Befestigungsfortsatz-Befestigungsbereichs bildet und/oder wobei der untere Befestigungsbereich an seiner Außenfläche wenigstens zwei in Umfangsrichtung voneinander beabstandete Außengewindebereiche aufweist. Diese Anschlagsfläche definiert in vertikaler Richtung gesehen die endgültige Befestigungsposition.

Gemäß einer weiteren Ausführungsform des Kruken-Bodens weist der untere, im Wesentlichen zylindrische Befestigungsbereich an seiner nach unten gerichteten Seite eine insbesondere ringförmige Anschlagsfläche auf, die einen Anschlag für eine Einschraub-Begrenzungsfläche eines Einschraub-Begrenzungsbereichs eines Kruken-Befestigungsfortsatz-Befestigungsbereichs bildet. Diese Einschraub-Begrenzungsfläche definiert in vertikaler Richtung gesehen, die endgültige Befestigungsposition.

Gemäß einer ersten Ausführungsform des Apotheken-Rezepturherstellungs-Vorrichtungs-Hubarms weisen die Innengewindebereiche jeweils mehrere, insbesondere 2 bis 10, in Axialrichtung gesehen, äquidistant übereinander angeordnete Gewindewandungen mit gleicher Steigung auf. Die mehreren übereinander angeordneten Gewindewandungen ermöglichen, dass der Kruken-Deckel, der Kruken-Boden oder der Kruken-Adapter eine sichere Befestigung an dem Kruken-Befestigungsfortsatz-Befestigungsbereich des Hubarms gewährleistet, wobei 2 Gewindewandungen bereits für eine ausreichend sichere Befestigung in dem Kruken-Befestigungsfortsatz-Befestigungsbereich des erfindungsgemäßen Hubarms genügen. Zur besseren Lesbarkeit wird im Folgenden der Begriff Hubarm als Kurzform von Apotheken-Rezepturherstellungs-Vorrichtungs-Hubarm verwendet.

Gemäß einer weiteren vorteilhaften Ausführungsform des Hubarms weist der Kruken-Befestigungsfortsatz-Befestigungsbereich eine im Wesentlichen zylindrische Gestalt auf.

Gemäß der Erfindung, weist der Hubarm an seiner Unterseite einen Entnahmepositions-Hinweisstift auf, der sich von der Unterseite des Hubarms, insbesondere bis zu 4mm, in vertikaler Richtung nach unten erstreckt. Der Entnahmepositions-Hinweisstift ist bevorzugt radial außerhalb des Kruken-Befestigungsfortsatz-Befestigungsbereich angeordnet, so dass beim Schnellbefestigen des Kruken-Deckels in dem Kruken-Befestigungsfortsatz-Befestigungsbereich der Entnahmepositions-Hinweisstift zwischen der Deckelplatte des Kruken-Deckels oder der Bodenplatte des Kruken-Bodens und der Unterseite des Hubarms angeordnet ist. Beim Lösen der Kruke aus einem Kruken-Befestigungsfortsatz-Befestigungsbereich schlägt die Positionierungs-Erhebung am Entnahmepositions-Hinweisstift des Apotheken-Rezepturherstellungs-Vorrichtungs-Hubarms an und signalisiert damit dem Anwender, dass die Außengewindebereiche nicht mehr im Eingriff mit den Innengewindebereichen stehen und die Kruke ohne Behinderung aus dem Kruken-Befestigungsfortsatz-Befestigungsbereich herausnehmbar ist. Dies ermöglicht ein besonders Anwenderfreundliches Lösen der Kruke.

Der Entnahmepositions-Hinweisstift und die Positionierungs-Erhebung verhindern, dass beim Lösen des Kruken-Deckels oder des Kruken-Bodens aus dem Kruken-Befestigungsfortsatz-Befestigungsbereich des Hubarms die Außengewindebereiche des Befestigungsfortsatzes in die in Drehrichtung gesehen nächsten Innengewindebereiche eingreifen und dadurch ein Herausziehen des Befestigungsfortsatzes aus dem Kruken-Befestigungsfortsatz-Befestigungsbereich erschweren bzw. verhindern.

Gemäß einer weiteren Ausführungsform des Hubarms weist der Kruken-Befestigungsfortsatz-Befestigungsbereich einen oberen, im Wesentlichen zylindrischen Aussparungsbereich und einen unteren, im Wesentlichen zylindrischen Aussparungsbereich größeren Durchmessers auf, wobei am Übergang zwischen dem unteren und dem oberen im Wesentlichen zylindrischen Aussparungsbereich eine nach unten gerichtete, insbesondere ringförmige Anschlagsfläche ausgebildet ist, die einen Anschlag für eine Anschlagsfläche eines Befestigungsfortsatzes des Apotheken-Rezepturherstellungs-Kruken-Deckels, des Apotheken-Rezepturherstellungs-Kruken-Bodens oder des Apotheken-Rezepturherstellungs-Kruken-Adapters bildet und/oder wobei der obere Aussparungsbereich an seiner Innenfläche wenigstens zwei in Umfangsrichtung voneinander beabstandete Innengewindebereiche aufweist. Diese Anschlagsfläche definiert in vertikaler Richtung gesehen die endgültige Befestigungsposition. Diese wird erreicht, wenn eine Kruken-Deckel, Kruken-Boden oder Kruken-Adapter zunächst in vertikaler Richtung eingeschoben wird in einer Drehposition in der die Außengewindebereiche fluchtend mit den gewindefreien Innenflächen des Kruken-Befestigungsfortsatz-Befestigungsbereichs des Hubarms angeordnet sind und danach in die Befestigungsposition gedreht wird, in der die Außengewindebereiche in die Innengewindebereiche eingreifen, bis die Anschlagsfläche an der Anschlagsfläche des Kruken-Befestigungsfortsatz-Befestigungsbereichs anliegt.

Gemäß einer weiteren Ausführungsform weist der Kruken-Befestigungsfortsatz-Befestigungsbereich am oberen Ende des oberen, im Wesentlichen zylindrischen Aussparungsbereichs einen Einschraub-Begrenzungsbereich auf, der einen geringeren Innendurchmesser aufweist als der Innendurchmesser des Innengewindebereichs. Dadurch bildet der Einschraub-Begrenzungsbereich eine Einschraub-Begrenzungsfläche an seiner Unterseite in Richtung des unteren, im Wesentlichen zylindrischen Aussparungsbereich aus, wobei die Einschraub-Begrenzungsfläche einen Anschlag für die Anschlagsfläche des Befestigungsfortsatzes bildet. Dies ermöglicht eine besonders vorteilhafte Befestigungsmöglichkeit für den Befestigungsfortsatz des Kruken-Deckels, des Kruken-Bodens oder des Kruken-Adapters in dem Kruken-Befestigungsfortsatz-Befestigungsbereich des Hubarms.

Gemäß einer weiteren Ausführungsform weist der Hubarm weiterhin eine Befestigungs-Klaue mit zwei Klauenfortsätzen auf, wobei die Befestigungs-Klaue den Kruken-Befestigungsfortsatz-Befestigungsbereich und einen Rührstab-Einschiebebereich aufweist, der als sich von der Unterseite zur Oberseite des Grundkörpers erstreckende Aussparung ausgebildet ist und der sich von dem vorderen Längsende des Grundkörpers zu dem Kruken-Befestigungsfortsatz-Befestigungsbereich erstreckt.

Dadurch ist es möglich, eine Rührwelle, die beim Einschrauben einer befüllten Apotheken-Rezepturherstellungs-Kruke aus dem Kruken-Behältnis herausragt, zwischen den zwei Klauenfortsätzen hindurchzuführen und somit die Apotheken-Rezepturherstellungs-Kruke von vorne in den erfindungsgemäßen Hubarm einzuschieben. Das Einschieben von vorne wird von vielen Benutzern als einfacher und benutzerfreundlicher empfunden.

Gemäß einer weiteren Ausführungsform des Hubarms weist wenigstens einer der Innengewindebereiche einen umfangsmäßig mittleren Innengewindebereichs-Abschnitt und zwei zu beiden Seiten in Umfangsrichtung daran anschließende, umfangsmäßig äußere Innengewindebereichs-Abschnitte auf. Der mittlere Innengewindebereich ermöglicht einen sicheren Eingriff des Innengewindebereichs in den Außengewindebereich des Befestigungsfortsatzes des Kruken-Deckels, des Kruken-Bodens oder des Kruken-Adapters und die äußeren Innengewindebereichs-Abschnitte erlauben, dass an diesen jeweils ein Außengewindebereich des Befestigungsfortsatz des Kruken-Deckels, des Kruken-Bodens oder des Kruken-Adapters leicht vorbeibewegbar ist.

Gemäß einer weiteren Ausführungsform des Hubarms nimmt die Höhe der Gewindewandungen in den umfangsmäßig äußeren Innengewindebereichs-Abschnitten, gemessen radial zur gekrümmten Ebene der Innenfläche des Kruken-Befestigungsfortsatz-Befestigungsbereichs oder zu dem Gewindegangboden, vom umfangsmäßig inneren, zum mittleren Innengewindebereichs-Abschnitt gerichteten Ende zum umfangsmäßig äußeren Ende des jeweiligen äußeren Innengewindebereichs-Abschnitts ab, und nimmt insbesondere so ab, dass das umfangsmäßig äußere Ende des jeweiligen äußeren Innengewindebereichs-Abschnitts in die gekrümmten Ebene der Innenfläche des Kruken-Befestigungsfortsatz-Befestigungsbereichs übergeht und/oder dessen Höhe, gemessen radial zur gekrümmten Ebene der Innenfläche des Kruken-Befestigungsfortsatz-Befestigungsbereichs, Null ist.

Somit können die Innengewindebereiche einfach und sicher mit den jeweils korrespondierenden Außengewindebereichen des Befestigungsfortsatzes des Kruken-Deckels, des Kruken-Bodens oder des Kruken-Adapters in Eingriff gebracht werden und Verkantungen können weitestgehend vermieden werden.

Gemäß einer weiteren Ausführungsform des Hubarms setzt, im Falle, dass eine Befestigungs-Klaue vorgesehen ist, an den umfangsmäßig an den Rührstab-Einschiebebereich angrenzenden Enden des Kruken-Befestigungsfortsatz-Befestigungsbereichs jeweils ein vorderer Innengewindebereich an, und von diesen vorderen Innengewindebereichen sind zwei gewindefreie Innenflächen-Zwischenbereiche und ein hinterer, dem Rührstab-Einschiebebereich gegenüber liegender Innengewindebereich eingeschlossen. Dies ermöglicht eine besonders vorteilhafte Befestigungsmöglichkeit für den Befestigungsfortsatz des Kruken-Deckels, des Kruken-Bodens oder des Kruken-Adapters in dem Kruken-Befestigungsfortsatz-Befestigungsbereich des Hubarms.

Die Erfindung betrifft des Weiteren eine erfindungsgemäße Apotheken-Rezepturherstellungs-Vorrichtung, die zum Herstellen eines pharmazeutischen Individual-Produkts, insbesondere von pharmazeutischen Individual-Produkten, wie Rezepturen für Salben, halbfeste Zubereitungen, Pasten, Cremes, Gelen, Emulsionen, Augentropfen, Tinkturen, Tabletten, Kapseln oder Tees, ausgebildet ist, und die Folgendes umfasst:
eine Standeinheit mit einem Sockelbereich, und einem Kopfbereich, und einem den Sockelbereich mit dem Kopfbereich verbindenden Mittelbereich, wobei sich der Kopfbereich über den Mittelbereich nach vorne erstreckt;
eine an dem Mittelbereich angeordnete und nach oben und nach unten bewegbare Hubeinheit mit einem sich im Wesentlichen in horizontaler Richtung nach vorne erstreckenden Apotheken-Rezepturherstellungs-Vorrichtungs-Hubarm der oben beschriebenen Art;
eine in oder an dem Kopfbereich angeordnete, motorisch antreibbare Rühreinheit mit einem sich von dem Kopfbereich nach unten erstreckenden Rührstab, an dessen unterem Ende ein Rührwerkzeug anbringbar oder angeordnet ist; und
eine Steuereinheit, die so ausgebildet ist, dass die Rühreinheit motorisch antreibbar ist und/oder dass die Hubeinheit mit Hubeinheits-Fixierstift nach oben und nach unten verfahrbar ist.

Die vorstehend mit Bezug auf den Apotheken-Rezepturherstellungs-Vorrichtungs-Hubarm angegebenen Vorteile und Ausführungsformen sowie die der Erfindung zugrunde liegenden Erkenntnisse und Grundgedanken treffen in gleicher Weise auf die erfindungsgemäße Apotheken-Rezepturherstellungs-Vorrichtung zu und werden an dieser Stelle nicht noch einmal wiederholt. Angeordnet bedeutet hier, dass das Rührwerkzeug einstückig mit dem Rührstab ausgebildet oder separat ausgebildet und an dem Rührstab befestigt ist.

Das Rührwerkzeug greift von oben vertikal in eine Apotheken-Rezepturherstellungs-Kruke ein, die erfindungsgemäß besonders schnell und gleichzeitig sicher an dem Apotheken-Rezepturherstellungs-Vorrichtungs-Hubarm angeordnet werden kann und ebenfalls schnell und sicher aus der Apotheken-Rezepturherstellungs-Vorrichtung gelöst werden kann, was Zeit und Kosten spart. Die Befestigung der Apotheken-Rezepturherstellungs-Kruke erfolgt durch das Ineinandergreifen von Außengewindebereichen des Befestigungsfortsatzes eines Kruken-Deckels, eines Kruken-Bodens oder eines auf einen konventionellen Kruken-Deckel oder Kruken-Boden befestigten Kruken-Adapters gegenüber Innengewindebereichen des Kruken-Befestigungsfortsatz-Befestigungsbereich des erfindungsgemäßen Hubarms.

Mit anderen Worten betrifft die Erfindung auch eine Kombination aus Apotheken-Rezepturherstellungs-Vorrichtung, Apotheken-Rezepturherstellungs-Vorrichtungs-Hubarm und Apotheken-Rezepturherstellungs-Kruke. Die vorher in Bezug auf den Apotheken-Rezepturherstellungs-Vorrichtungs-Hubarm und die Apotheken-Rezepturherstellungs-Kruke genannten Vorteile und Ausführungsformen treffen in gleicher Weise auch für die Apotheken-Rezepturherstellungs-Vorrichtung zu.

Durch die korrespondierende Ausbildung der Außengewindebereiche des Befestigungsfortsatzes und der Innengewindebereiche des Kruken-Befestigungsfortsatz-Befestigungsbereichs ist es dem Anwender möglich, die Apotheken-Rezepturherstellungs-Vorrichtung schneller und leichter zu bedienen und somit die Effizienz der Apotheken-Rezepturherstellungs-Vorrichtung zu erhöhen.

Bei einer weiteren Ausführungsform der Apotheken-Rezepturherstellungs-Vorrichtung ist der Befestigungsfortsatz-Befestigungsbereich des Apotheken-Rezepturherstellungs-Vorrichtungs-Hubarms fluchtend mit dem sich von der motorisch antreibbaren Rühreinheit nach unten erstreckenden Rührstab angeordnet und/oder der Rührstab erstreckt sich durch den Befestigungsfortsatz der eingeschraubten Apotheken-Rezepturherstellungs-Kruke.

Das erfindungsgemäße Schnell-Befestigen und Schnell-Lösen kann auch als Schnell-Kuppeln bzw. als Schnell-Kupplung bezeichnet werden.

Die Erfindung ist nachfolgend anhand von Ausführungsbeispielen mit Bezug auf die beiliegenden Figuren näher erläutert.

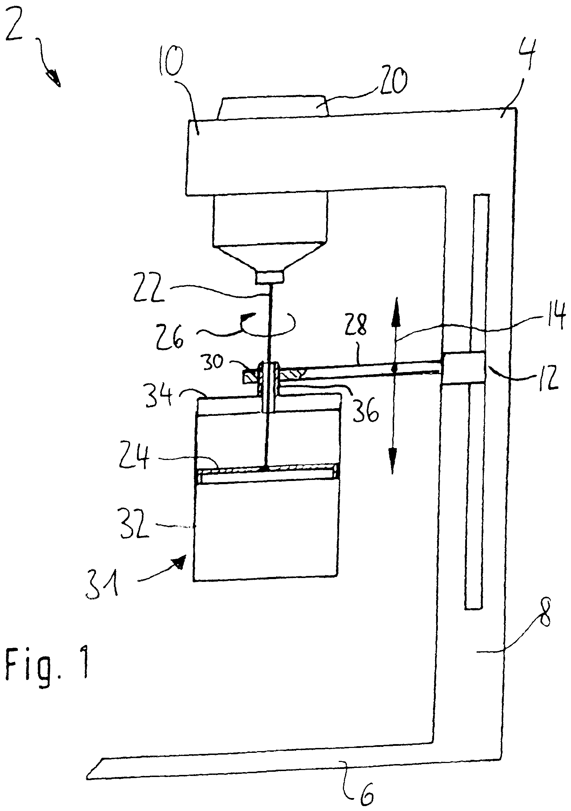

Figur 1 zeigt eine schematische Seitenansicht einer Apotheken-Rezepturherstellungs-Vorrichtung mit einem an einer Hubeinheit derselben angeordneten Hubarm, an dessen Vorderseite eine Apotheken-Rezepturherstellungs-Kruke bzw. Kruke befestigt ist, und mit einer an dessen Kopfbereich angeordneten Rühreinheit mit Rührstab und Rührwerkzeug, gemäß einem Ausführungsbeispiel der vorliegenden Erfindung;

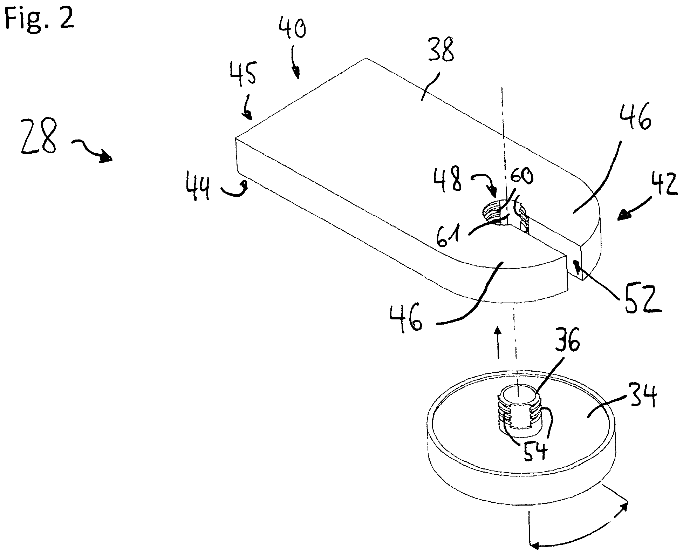

Figur 2 zeigt eine perspektivische vergrößerte Ansicht des Apotheken-Rezepturherstellungs-Vorrichtungs-Hubarms und des daran zu befestigenden Apotheken-Rezepturherstellungs-Kruken-Deckels mit Befestigungsfortsatz, gemäß einem weiteren Ausführungsbeispiel der vorliegenden Erfindung;

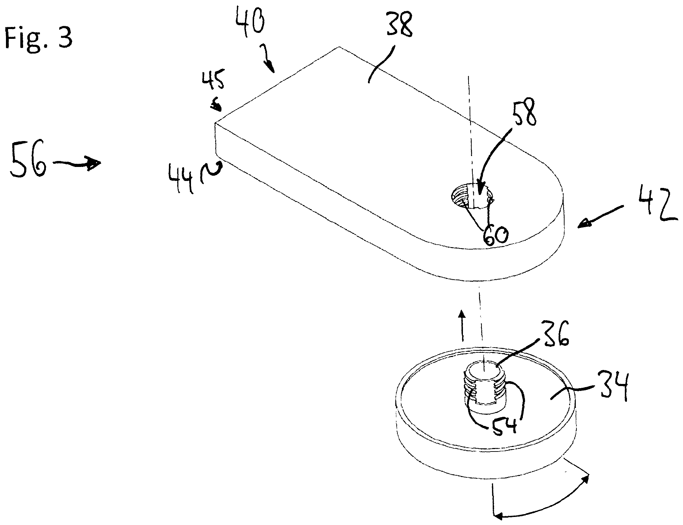

Figur 3 zeigt eine schematische Perspektivansicht eines zweiten Apotheken-Rezepturherstellungs-Vorrichtungs-Hubarms und des daran zu befestigenden Apotheken-Rezepturherstellungs-Kruken-Deckels mit Befestigungsfortsatz, gemäß einem weiteren Ausführungsbeispiel der vorliegenden Erfindung;

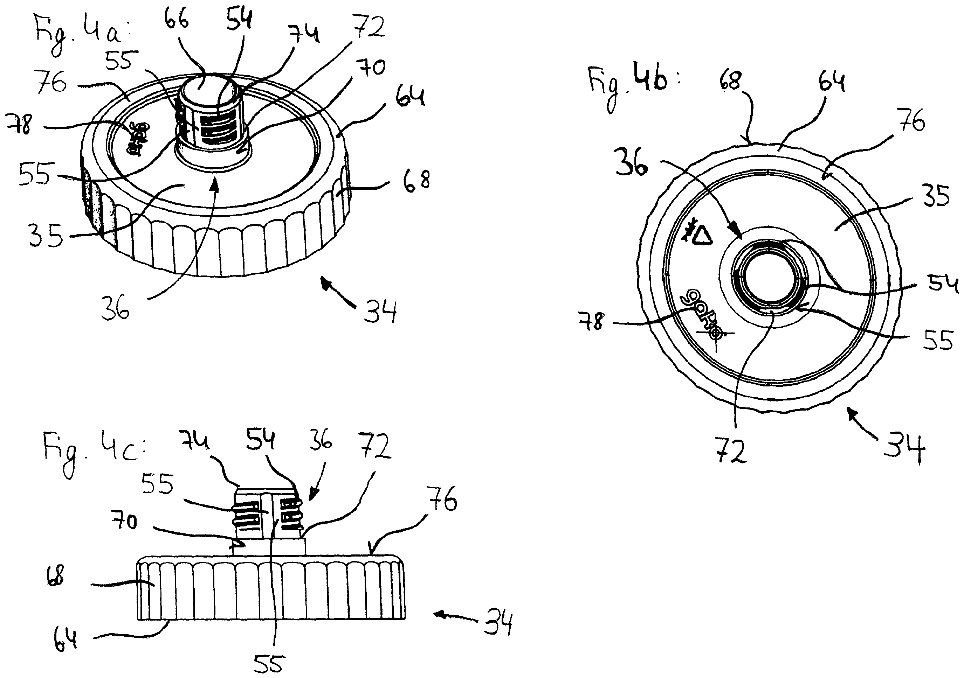

Figur 4 zeigt anhand ihrer Teilfigur 4a eine schematische Perspektivansicht, anhand ihrer Teilfigur 4b eine Draufsicht und anhand ihrer Teilfigur 4b eine Seitenansicht eines Apotheken-Rezepturherstellungs-Kruken-Deckels der Apotheken-Rezepturherstellungs-Kruke, gemäß einem weiteren Ausführungsbeispiel der vorliegenden Erfindung;

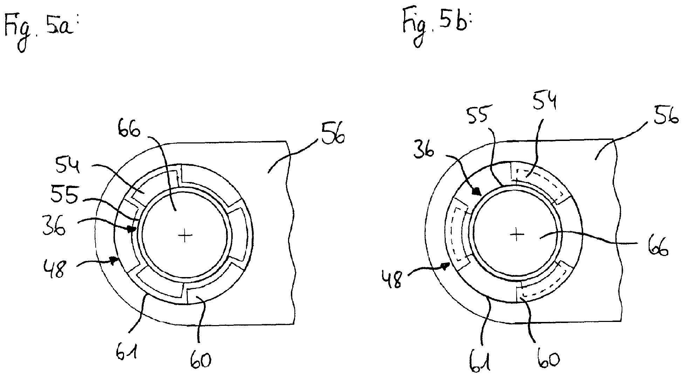

Figur 5 zeigt anhand ihrer Teilfigur 5a eine Draufsicht auf das vordere Ende des zweiten Hubarms und auf den Befestigungsfortsatz des Kruken-Deckels in der Einschiebe-Position und anhand ihrer Teilfigur 5b eine Draufsicht auf das vordere Ende des zweiten Hubarms und auf den Befestigungsfortsatz des Kruken-Deckels in der Befestigungs-Position, gemäß einem weiteren Ausführungsbeispiel der vorliegenden Erfindung;

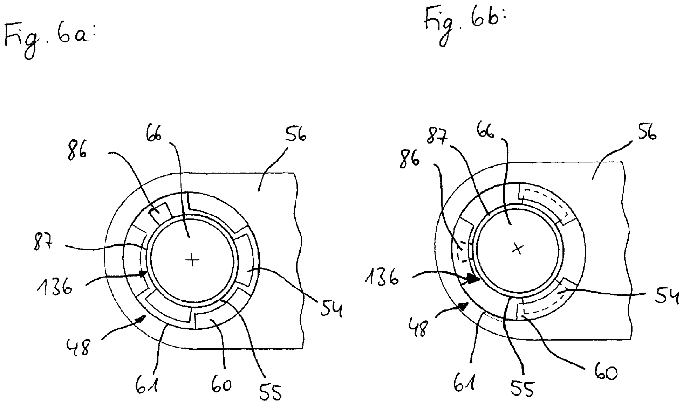

Figur 6 zeigt anhand ihrer Teilfigur 6a eine Draufsicht auf das vordere Ende des zweiten Hubarms und auf einen weiteren Befestigungsfortsatz des Kruken-Deckels in der Einschiebe-Position und anhand ihrer Teilfigur 6b eine Draufsicht auf das vordere Ende des zweiten Hubarms und auf diesen Befestigungsfortsatz des Kruken-Deckels in der Befestigungs-Position, gemäß einem weiteren Ausführungsbeispiel der vorliegenden Erfindung;

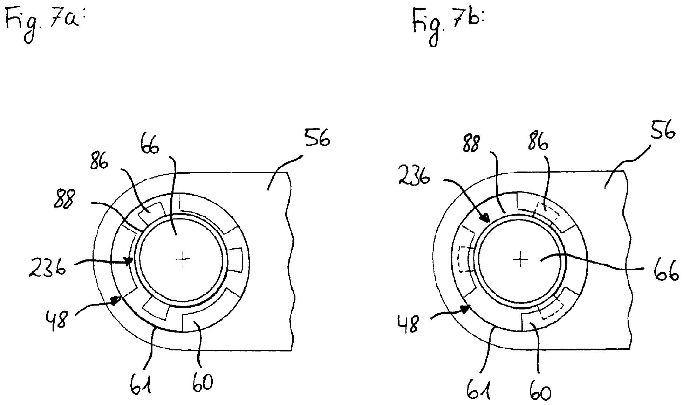

Figur 7 zeigt anhand ihrer Teilfigur 7a eine Draufsicht auf das vordere Ende des zweiten Hubarms und auf einen weiteren Befestigungsfortsatz des Kruken-Deckels in der Einschiebe-Position und anhand ihrer Teilfigur 7b eine Draufsicht auf das vordere Ende des zweiten Hubarms und auf diesen Befestigungsfortsatz des Kruken-Deckels in der Befestigungs-Position, gemäß einem weiteren Ausführungsbeispiel der vorliegenden Erfindung;

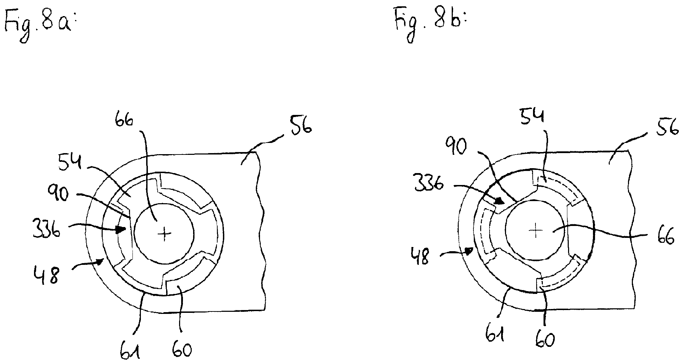

Figur 8 zeigt anhand ihrer Teilfigur 8a eine Draufsicht auf das vordere Ende des zweiten Hubarms und auf einen weiteren Befestigungsfortsatz des Kruken-Deckels in der Einschiebe-Position und anhand ihrer Teilfigur 8b eine Draufsicht auf das vordere Ende des zweiten Hubarms und auf diesen Befestigungsfortsatz des Kruken-Deckels in der Befestigungs-Position.

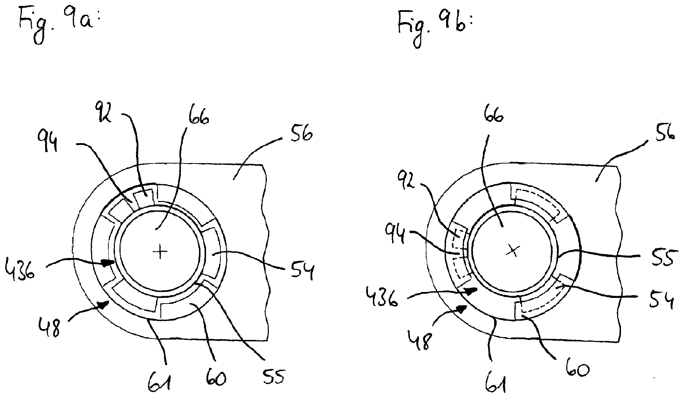

Figur 9 zeigt anhand ihrer Teilfigur 9a eine Draufsicht auf das vordere Ende des zweiten Hubarms und auf einen weiteren Befestigungsfortsatz des Kruken-Deckels in der Einschiebe-Position und anhand ihrer Teilfigur 9b eine Draufsicht auf das vordere Ende des zweiten Hubarms und auf diesen Befestigungsfortsatz des Kruken-Deckels in der Befestigungs-Position, gemäß einem weiteren Ausführungsbeispiel der vorliegenden Erfindung;

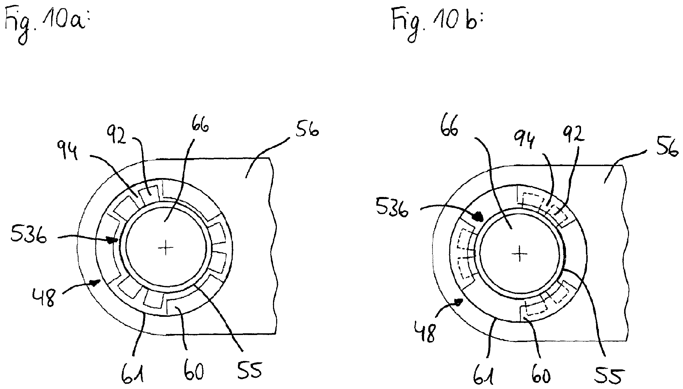

Figur 10 zeigt anhand ihrer Teilfigur 10a eine Draufsicht auf das vordere Ende des zweiten Hubarms und auf einen weiteren Befestigungsfortsatz des Kruken-Deckels in der Einschiebe-Position und anhand ihrer Teilfigur 10b eine Draufsicht auf das vordere Ende des zweiten Hubarms und auf diesen Befestigungsfortsatz des Kruken-Deckels in der Befestigungs-Position, gemäß einem weiteren Ausführungsbeispiel der vorliegenden Erfindung;

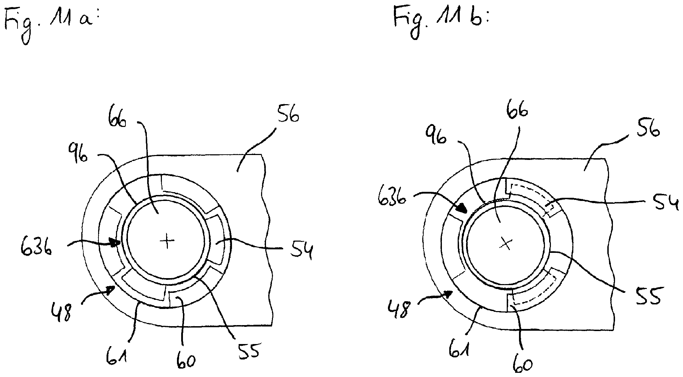

Figur 11 zeigt anhand ihrer Teilfigur 11a eine Draufsicht auf das vordere Ende des zweiten Hubarms und auf einen weiteren Befestigungsfortsatz des Kruken-Deckels in der Einschiebe-Position und anhand ihrer Teilfigur 11b eine Draufsicht auf das vordere Ende des zweiten Hubarms und auf diesen Befestigungsfortsatz des Kruken-Deckels in der Befestigungs-Position, gemäß einem weiteren Ausführungsbeispiel der vorliegenden Erfindung;

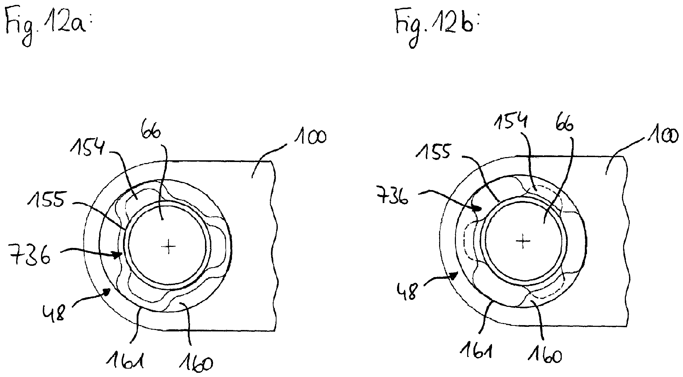

Figur 12 zeigt anhand ihrer Teilfigur 12a eine Draufsicht auf das vordere Ende eines dritten Hubarms und auf einen weiteren Befestigungsfortsatz des Kruken-Deckels in der Einschiebe-Position und anhand ihrer Teilfigur 10b eine Draufsicht auf das vordere Ende des dritten Hubarms und auf diesen Befestigungsfortsatz des Kruken-Deckels in der Befestigungs-Position, gemäß einem weiteren Ausführungsbeispiel der vorliegenden Erfindung; und

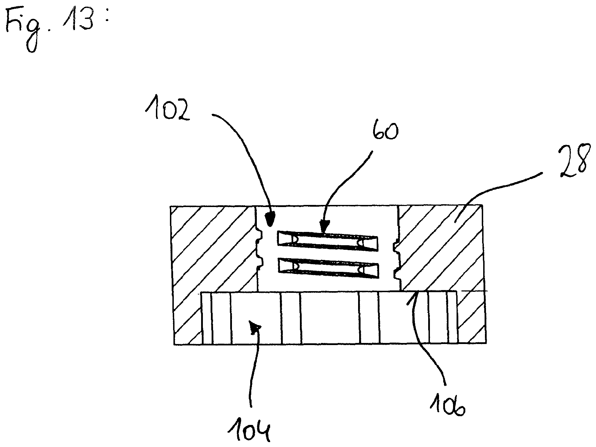

Figur 13 zeigt einen Querschnitt durch den Kruken-Befestigungsfortsatz-Befestigungsbereich des zweiten Hubarms, gemäß einem weiteren Ausführungsbeispiel der vorliegenden Erfindung.

Figur 1 zeigt eine schematische Seitenansicht einer Apotheken-Rezepturherstellungs-Vorrichtung 2 mit einem an einer Hubeinheit 12 derselben angeordneten Hubarm 28, an dessen Vorderseite eine Apotheken-Rezepturherstellungs-Kruke bzw. Kruke 31 befestigt ist, und mit einer an dessen Kopfbereich 10 angeordneten Rühreinheit 20 mit Rührstab 22 und Rührwerkzeug 24.

Die Apotheken-Rezepturherstellungs-Vorrichtung 2 umfasst eine Standeinheit 4 mit einem Sockelbereich 6, mit einem Mittelbereich 8 und mit einem Kopfbereich 10. Der Mittelbereich 8 erstreckt sich in vertikaler Richtung zwischen dem hinteren Ende des Sockelbereichs 6 und dem hinteren Ende des Kopfbereichs 10, und der Sockelbereich 6 sowie der Kopfbereich 10 erstrecken sich, bezogen auf den Mittelbereich 8, nach vorne. Dementsprechend wird durch den Sockelbereich 6, den Mittelbereich 8 und den Kopfbereich 10 ein Arbeitsraum umschlossen.

An einem mittleren bis vorderen Abschnitt des Kopfbereichs 10 ist eine Rühreinheit 20 angeordnet, mit einem sich von dieser vertikal nach unten erstreckendem Rührstab 22, an dessen unteren Ende ein Rührwerkzeug 24 angeordnet ist, das durch einen Befestigungsfortsatz 36 und durch einen Apotheken-Rezepturherstellungs-Kruken-Deckel bzw. Kruken-Deckel 34 in ein Apotheken-Rezepturherstellungs-Kruken-Behältnis bzw. Kruken-Behältnis 32 eingreift. Der Kruken-Deckel 34, der Befestigungsfortsatz 36 und das Kruken-Behältnis 32 bilden zusammen die Apotheken-Rezepturherstellungs-Kruke 31 aus. Die Kruke 31 mit dem Befestigungsfortsatz 36 wird von dem nachfolgend in Figuren 2 oder 3 erläuterten Apotheken-Rezepturherstellungs-Vorrichtungs-Hubarm bzw. Hubarm 28, 56 gehaltert. Die Rühreinheit 20 verfügt über einen elektrischen Motor, der so ausgebildet ist, dass er den Rührstab 22 und das Rührwerkzeug 24 in Rotationsbewegungsrichtung, die mittels eines Pfeils gekennzeichnet ist, bewegen kann.

An dem Mittelbereich 8 ist eine Hubeinheit 12 angeordnet und mittels eines hier nicht dargestellten Elektromotors, in vertikaler Hub-Bewegungsrichtung 14 auf und ab bewegbar.

Alternativ kann auch kein Elektromotor vorhanden sein. In diesem Fall dient die Hubeinheit 12 als Führung für die an dem Hubarm 28 befestigte Kruke 31, wobei die Kruke 31, der Hubarm 28 und die Hubeinheit 12 von einem Anwender manuell in vertikaler Richtung entlang des Mittelbereichs 8 auf und ab bewegbar ist.

Das Ausmaß der vertikalen Hub-Bewegungsrichtung 14 richtet sich nach der Höhe des Innenvolumens des jeweils an dem Hubarm 28 befestigte Kruke 31. Vorzugsweise kann die Hubeinheit 12 zwischen einer oberen Position unmittelbar unter dem unteren Ende der oberen Rühreinheit 22 und einer unteren Verschiebeposition bewegbar sein, die soweit oberhalb des Sockelbereichs 6 liegt, dass noch eine große Kruke 31 zwischen einem an der Hubeinheit 12 befestigten Hubarm und dem oberen Ende des Sockelbereichs 6 passt.

Die Hubeinheit 12 umfasst einen in Figur 1 zu sehenden Hubarm 28, der einstückig mit der Hubeinheit 12 ausgebildet oder separat von dieser ausgebildet und an dieser befestigt ist.

An oder nahe dem vorderen Längsende des Grundkörpers des Hubarms 28 ist ein Kruken-Befestigungsfortsatz-Befestigungsbereich bzw. Befestigungsbereich 30 angeordnet, der wenigstens einen Innengewindebereich 50 aufweist, der mit wenigstens einem korrespondierenden Außengewindebereich 54 des Befestigungsfortsatzes 36 des Kruken-Deckels 34 in Eingriff bringbar ist.

Die Apotheken-Rezepturherstellungs-Kruke 31 weist eine vorliegend als erste Kruken-Grundform bezeichnete Grundform auf, die einen zylindrischen Grundkörper aufweist, in dessen unterem Ende ein beweglicher Boden angeordnet ist zum Herausdrücken des Individual-Produkts, der den Innenbereich des zylindrischen Grundkörpers vom Außenbereich trennt und der an seinem gegenüberliegenden oberen Ende einen Befestigungsbereich für einen Apotheken-Rezepturherstellungs-Kruken-Deckel der hier beschriebenen Art aufweist. Der zylindrische Grundkörper weist keinen Hals oder eine andere Verengung an seinem oberen Ende auf, sodass vor dem Herstellen eines pharmazeutischen Individual-Produkts die Bestandteile zum Herstellen desselben auf einfache Art und Weise in die Apotheken-Rezepturherstellungs-Kruke 31 gegeben werden können und sodass das in der Apotheken-Rezepturherstellungs-Kruke 31 hergestellte pharmazeutische Individual-Produkt z.B. mittels eines Spatels auf einfache Weise vollständig entnommen werden kann. Des Weiteren ermöglicht der zylindrische Grundkörper, dass das Rührwerkzeug den gesamten Innenbereich der Apotheken-Rezepturherstellungs-Kruke 31 erreichen kann, so dass auch kleinste Agglomerate von Wirksubstanzen zerkleinert bzw. miteinander vermischt werden. Der Kruken-Deckel ist abnehmbar, weil sonst eine Zugabe der Inhaltsstoffe durch die obere Öffnung der Kruke nicht oder nur schlecht möglich wäre. Bei der ersten Kruken-Grundform ist der Kruken-Befestigungsfortsatz an der Oberseite der Kruke angeordnet und Teil des Krukendeckels.

Die Apotheken-Rezepturherstellungs-Kruke 31 verfügt über einen Apotheken-Rezepturherstellungs-Kruken-Deckel 34, der z.B. mittels eines Gewindes auf den kreiszylinderförmigen Mantel aufgeschraubt werden kann. Der Apotheken-Rezepturherstellungs-Kruken-Deckel 34 hat eine im Wesentlichen mittige Durchtritts-Öffnung sowie einen im Wesentlichen kreiszylinderförmigen Befestigungsfortsatz 36, der sich von der Durchtritts-Öffnung nach oben erstreckt. Der Befestigungsfortsatz 36 hat an seiner Außenfläche wenigstens zwei in Umfangsrichtung voneinander beabstandete Außengewindebereiche, die nachfolgend anhand der nachfolgenden Figuren noch näher erläutert werden.

In Betrieb der erfindungsgemäßen Apotheken-Rezepturherstellungs-Vorrichtung 2 werden zunächst die Bestandteile für das herzustellende pharmazeutische Individual-Produkt in das Apotheken-Rezepturherstellungs-Kruken-Behältnis 32 gegeben. Danach wird das Rührwerkzeug 24, das mit dem Rührstab 22 verbunden oder an selbigen angeordnet ist, in das Apotheken-Rezepturherstellungs-Kruken-Behältnis 32 eingeführt und kann auf den Inhaltsstoffen aufliegen oder in diese eintauchen. Nun wird der noch nicht mit der Rühreinheit 20 verbundene Rührstab 22 durch den Befestigungsfortsatz 36 des Apotheken-Rezepturherstellungs-Kruken-Deckels 34 geführt und der Apotheken-Rezepturherstellungs-Kruken-Deckel 34 wird bis zu dem Apotheken-Rezepturherstellungs-Kruken-Behältnis 32 geführt und auf dieses aufgesetzt oder aufgeschraubt oder auf andere geeignete Weise damit befestigt. Die Gesamtanordnung aus Apotheken-Rezepturherstellungs-Kruken-Behältnis 32, Apotheken-Rezepturherstellungs-Kruken-Deckel 34, Rührwerkzeug 24 und Rührstab 22 wird dann in den Kruken-Befestigungsfortsatz-Befestigungsbereich 30 des Apotheken-Rezepturherstellungs-Vorrichtungs-Hubarms 28 in vertikaler Richtung eingeführt, und zwar in einer Drehposition in der die Außengewindebereiche fluchtend mit gewindefreien Innenflächen-Zwischenbereichen des Kruken-Befestigungsfortsatz-Befestigungsbereichs 30 des Apotheken-Rezepturherstellungs-Vorrichtungs-Hubarms 28 angeordnet sind. Danach rastet der Rührstab 22 oben in die Rühreinheit 20 der Apotheken-Rezepturherstellungs-Vorrichtung 2 ein. Gleichzeitig oder anschließend erfolgt das eigentliche Befestigen, indem die Apotheken-Rezepturherstellungs-Kruke 31 entlang eines Drehwegs soweit gedreht wird, bis deren Außengewindebereiche in die Innengewindebereiche des Kruken-Befestigungsfortsatz-Befestigungsbereichs 30 eingreifen. Dieser Drehweg ist 90° oder geringer, je nachdem wie viele in Umfangsrichtung voneinander beabstandete Außengewinde-Bereiche und Innengewinde-Bereiche vorgesehen sind, und je nachdem über welchen Umfangswinkelbereich sich diese Außengewindebereiche und Innengewindebereiche erstrecken. Nun kann die Herstellung des pharmazeutischen Individual-Produkts beginnen.

Mit dem verschiebbaren Boden ist es möglich, die sich vor dem Beginnen eines Rührvorgangs in der Kruke 31 befindliche Luft zu verringern, um den Lufteintrag während des Rührvorgangs in die Bestandteile des pharmazeutischen Individual-Produkts zu minimieren und ebenfalls die durch Inprozesserwärmung bzw. durch chemische Reaktionen entstehende Ausdehnung der Bestandteile des pharmazeutischen Individual-Produkts Freiraum durch Ausweichen und/oder Verschieben nach unten zu gewähren. Dadurch kann verhindert werden, dass sich das Individual-Produkt nicht an anderen Dichtungsstellen wie dem Gewinde zwischen Kruken-Behältnis 32 und Kruken-Deckel 34 bzw. einer Dichtungslippe zwischen Rührstab 22 und Kruken-Zugangsöffnung 66 austreten kann und somit Undichtigkeit verhinderbar ist.

Figur 2 zeigt eine perspektivische vergrößerte Ansicht des Apotheken-Rezepturherstellungs-Vorrichtungs-Hubarms 28 und des daran zu befestigenden Apotheken-Rezepturherstellungs-Kruken-Deckels 34 mit Befestigungsfortsatz 36.

Der in Figur 2 gezeigte Apotheken-Rezepturherstellungs-Vorrichtungs-Hubarm 28 hat einen länglichen Grundkörper 38 mit einer im Wesentlichen quaderartigen flachen Grundform, mit einem hinteren ersten Längsende 40 und mit einem vorderen zweiten Längsende 42, an dem Klauen-Fortsätze 46 mit abgerundeter Außenform ausgebildet sind, die eine in der Längsmittelachse liegende Kruken-Befestigungsfortsatz-Befestigungsbereich 48 und eine davor angeordnete Rührstab-Einschiebeaussparung 52 ausbilden. Dies ist besonders vorteilhaft, denn der Rührstab 22, der aus der Apotheken-Rezepturherstellungs-Kruke 31 herausragt, muss nicht von unten durch den Kruken-Befestigungsfortsatz-Befestigungsbereich 48 geführt werden. Ein Beschädigen des Kruken-Befestigungsfortsatz-Befestigungsbereichs 48 durch unvorsichtiges Durchführen des Rührstabs 22 kann so vermieden werden.

Alternativ weist der Grundkörper des Apotheken-Rezepturherstellungs-Vorrichtungs-Hubarms an seinem hinteren ersten Längsende einen im Wesentlichen quadratischen Querschnitt auf, der sich entlang des Grundkörpers zu einem quaderartigen Querschnitt verbreitert und seinen breitesten Querschnitt in horizontaler Richtung auf Höhe des Kruken-Befestigungsfortsatz-Befestigungsbereichs aufweist.

In einer weiteren alternativen Ausführungsform des Grundkörpers des Apotheken-Rezepturherstellungs-Vorrichtungs-Hubarms weist der Grundkörper eine im wesentlichen gabel- bzw. löffel-artige Grundform auf, wobei der Kruken-Befestigungsfortsatz-Befestigungsbereich eine in horizontaler Ebene breitere Form einnimmt als das hintere erste Längsende des Grundkörpers.

Der Kruken-Deckel 34 weist eine zylindrische Deckelplatte 35 mit einem sich von der Mittelachse in vertikaler Richtung nach oben erstreckenden Befestigungsfortsatz 36 und einen äußeren, sich von der Deckelplatte 35 nach unten erstreckenden Deckelrand 64 auf. Der Kruken-Deckel 34 wird in der Figur 4 näher erläutert.

Die Kruken-Befestigungsfortsatz-Befestigungsbereich 48 verfügt in dem vorliegenden exemplarischen Ausführungsbeispiel über mehrere, insbesondere drei, jeweils in Umfangsrichtung beabstandet voneinander angeordnete Innengewindebereiche 50, die mit den jeweils drei ebenfalls voneinander beabstandet angeordneten Außengewindebereichen 54 des Befestigungsfortsatzes 36 des Apotheken-Rezepturherstellungs-Kruken-Deckels 34 korrespondieren. Die hubarmseitigen Innengewindebereiche 50 und die Kruken-Deckel-Befestigungsfortsatz-seitigen Außengewindebereiche 54 und die jeweils dazwischen liegenden gewindefreien Zwischenbereiche sind so aufeinander abgestimmt, dass der Befestigungsfortsatz 36 von unten in die Mischgefäß-Befestigungsfortsatz-Befestigungsaussparung 48 eingeschoben werden kann, und zwar in einer Drehposition, in der die Kruken-Deckel-Befestigungsfortsatz-seitigen Außengewindebereiche 54 an den Umfangspositionen liegen, die den gewindefreien Bereichen der Kruken-Befestigungsfortsatz-Befestigungsbereich 48 entsprechen.

Nach dem Einschieben von unten kann nun der Kruken-Deckel 34 in den Kruken-Befestigungsfortsatz-Befestigungsbereich 48 eingeschraubt werden, sodass die Kruken-Deckel-Befestigungsfortsatz-seitigen 54 in die Hubarm-seitigen Innengewindebereiche 50 eingreifen und der Kruken-Deckel 34 somit gegenüber dem Hubarm 28 befestigen.

Der Kruken-Befestigungsfortsatz-Befestigungsbereich 48 ist im Wesentlichen zylindrisch ausgebildet und der Rührstab-Einschiebebereich 52 kann einen im wesentlichen quaderförmigen Freiraum ausbilden.

Die Einschieberichtung des Apotheken-Rezepturherstellungs-Kruken-Deckels 34 mit Befestigungsfortsatz 36 von unten in den Kruken-Befestigungsfortsatz-Befestigungsbereich 48 ist in Figur 2 mittels eines vertikalen Pfeils gekennzeichnet. Die Drehrichtung zum Bringen der Innengewindebereiche 50 und der Außengewindebereiche 54 in die eingreifende Befestigungsposition und zurück ist in Figur 2 mittels eines Doppelpfeils gekennzeichnet.

Figur 3 zeigt eine schematische Perspektivansicht eines zweiten Apotheken-Rezepturherstellungs-Vorrichtungs-Hubarms 56, nachfolgend kurz als zweiter Hubarm 56 bezeichnet, und des daran zu befestigenden Apotheken-Rezepturherstellungs-Kruken-Deckels 34 mit Befestigungsfortsatz 36.

Der zweite Hubarm 56 entspricht dem Hubarm 28, wobei kein Rührstab-Einschiebebereich 52 vorgesehen ist und der Kruken-Befestigungsfortsatz-Befestigungsbereich 58 als im Wesentlichen zylindrische Durchgangsöffnung ausgebildet ist, die sich von unten nach oben durch den Grundkörper 38 des Apotheken-Rezepturherstellungs-Vorrichtungs-Hubarms 56 erstreckt. Gleiche Elemente werden mit gleichen Bezugszeichen wie in Figur 2 gekennzeichnet und zur Vermeidung von Wiederholungen nicht noch einmal erläutert.

Der Kruken-Deckel 34 ist identisch zu dem Kruken-Deckel 34 aus der Figur 2 und wird zwecks Vermeidung von Wiederholungen nicht noch einmal erläutert.

Der Kruken-Befestigungsfortsatz-Befestigungsbereich 58 ist wiederum so ausgebildet, dass er mehrere, im vorliegenden Ausführungsbeispiel drei, jeweils in Umfangsrichtung voneinander beabstandete Innengewindebereiche 60 und jeweils dazwischen angeordnete gewindefreie Innenflächen-Zwischenbereiche 61 aufweist.

Das Einschieben und Schnellbefestigen des Kruken-Deckels 34 mit dem Befestigungsfortsatz 36 in dem Kruken-Befestigungsfortsatz-Befestigungsbereich 58 des zweiten Hubarms 56 erfolgt wie mit Bezug auf die Figur 1 beschrieben.

Figur 4 zeigt anhand ihrer Teilfigur 4a eine schematische Perspektivansicht, anhand ihrer Teilfigur 4b eine Draufsicht und anhand ihrer Teilfigur 4b eine Seitenansicht eines Apotheken-Rezepturherstellungs-Kruken-Deckels 34 der Apotheken-Rezepturherstellungs-Kruke 2.

Von der Deckelplatte des Krukendeckels 34 steht der zylinderförmige Befestigungsfortsatz 36 nach oben weg. Der zylinderförmige Befestigungsfortsatz 36 hat ein sich in vertikaler Richtung mittig durch diesen erstreckende Kruken-Zugangsöffnung 66, durch die der Rührstab 22 der Apotheken-Rezepturherstellungs-Vorrichtung 2 hindurchgeführt werden kann, und die somit einen Zugang zu dem unterhalb des Befestigungsfortsatzes 36 und der Deckelplatte 35 anordenbaren Krukenbehältnis 32 ermöglicht. Diese Kruken-Zugangsöffnung 66 wird radial nach außen von der Innenfläche der zylindrischen Wand des Befestigungsfortsatzes 36 begrenzt.

Der Befestigungsfortsatz 36 hat einen oberen, im Wesentlichen zylindrischen Befestigungsbereich 74 und einen unteren, im Wesentlichen zylindrischen Sockelbereich 70 größeren Durchmessers, wobei am Übergang zwischen dem unteren Sockelbereich 70 und dem oberen Befestigungsbereich 74 eine nach oben gerichtete, insbesondere ringförmige Anschlagsfläche 76 ausgebildet ist, die einen Anschlag für die in Fig. 14 gezeigte Anschlagsfläche 106 eines Kruken-Befestigungsfortsatz-Befestigungsbereichs 48 bildet. Des Weiteren weist der Befestigungsfortsatz 36 an einem oberen Ende des oberen, im Wesentlichen zylindrischen Befestigungsbereichs 74 eine nach oben gerichtete, insbesondere ringförmige Anschlagsfläche auf, die einen Anschlag für eine von einem Einschraub-Begrenzungsbereich ausgebildete hier nicht gezeigte Einschraub-Begrenzungsfläche des Kruken-Befestigungsfortsatz-Befestigungsbereichs 48 bildet. Der obere Befestigungsbereich 74 weist an seiner Außenfläche drei in Umfangsrichtung voneinander beabstandete Außengewindebereiche 54 und jeweils drei dazwischen angeordnete gewindefreie Außenflächen-Zwischenbereich 55 auf.

Die Gewindewandungen der Außengewindebereiche 54 verfügen jeweils über die gleiche Steigung, die gleiche Steigungsrichtung sowie den gleichen Steigungswinkel. Der Steigungswinkel beträgt in dem nicht einschränkenden Ausführungsbeispiel zwischen 3 und 5°.

Die Außenflächen-Zwischenbereiche 55 weisen parallel zur Längsachse des Befestigungsfortsatzes 36 verlaufende Befestigungsfortsatz-Abflachungen auf, die das Einführen des Befestigungsfortsatzes 36 in den Kruken-Befestigungsfortsatz-Befestigungsbereich 48 zusätzlich vereinfachen können.

In dem gezeigten, nicht einschränkenden Ausführungsbeispiel nehmen die gewindefreien Außenflächen-Zwischenbereiche 55 einen Winkelbereich von 50 bis 60° ein. Die Außengewindebereiche 54 nehmen jeweils einen Winkelbereich von 60-70° ein. In Figur 4b ist zu erkennen, dass einer der Außen-Gewindebereiche 54 etwas breiter ausgebildet ist als die anderen beiden, jeweils gleich breiten Außengewindebereiche 54.

Die Außengewindebereiche 54 haben einen umfangsmäßig mittleren Außengewindebereichs-Abschnitt, in denen die Gewindewandungen eine gleichbleibende Höhe, gemessen radial zur gekrümmten Ebene der Befestigungsfortsatz-Außenfläche oder zu dem Gewindegang-Boden aufweisen, und zwei in beide Umfangsrichtungen daran anschließende umfangsmäßig äußere Außengewindebereichs-Abschnitte, in denen die Höhe der Gewindewandungen, wiederum gemessen radial zu der gekrümmten Ebene der Befestigungsfortsatz-Außenfläche oder zu dem Gewindegang-Boden abnimmt, und zwar vom umfangsmäßig inneren, zu dem mittleren Außengewindebereichs-Abschnitt gerichteten Ende zum umfangs mäßig äußeren Ende des jeweiligen äußeren Außengewindebereichs-Abschnitts. Das umfangsmäßig äußere Ende des jeweiligen äußeren Außengewindebereichs-Abschnitts geht dort in die gekrümmte Ebene der Befestigungsfortsatz-Außenfläche über, und dessen Höhe ist dort Null.

Des Weiteren ist zu erkennen, dass die Außengewindebereiche 54 jeweils über drei Gewindewandungen verfügen, die jeweils äquidistant zueinander angeordnet sind, und die gleiche Steigungsrichtung und den gleichen Steigungswinkel aufweisen.

An seinem oberen Rand kann der Befestigungsfortsatz 36 eine Befestigungsfortsatz-Rand-Fase aufweisen, die sich schräg nach unten von Innenfläche zu Außenfläche der zylindrischen Wand des Befestigungsfortsatzes 36 erstreckt. Eine solche Befestigungsfortsatz-Rand-Fase kann das Einführen des Befestigungsfortsatzes 36 in den Kruken-Befestigungsfortsatz-Befestigungsbereich 48 weiter vereinfachen.

Die Deckelplatte 35 umfasst des Weiteren einen Deckelrand 64, der sich von einem äußeren Rand der Deckelplatte 35 nach unten, in entgegengesetzter Richtung zum Befestigungsfortsatz 36, erstreckt, und der mit einem Innengewinde zum Aufschrauben auf Kruken-Behältnis versehen sein kann und der mit dem Außengewinde eines die erste Kruken-Grundform aufweisendes Apotheken-Rezepturherstellungs-Kruken-Behältnisses 32 korrespondiert.

Die Deckelplatte 35 weist zudem zwischen dem unteren Ende des Befestigungsfortsatzes 36 und dem Deckelrand 64 eine Positionierungs-Markierung 78 auf, die in Verbindung mit einer weiteren, hier nicht gezeigten Hubarm-seitigen Positionierungs-Markierung dem Benutzer die Einschiebeposition anzeigen kann. Im vorliegenden, nicht einschränkenden Ausführungsbeispiel ist diese Positionierungs-Markierung 78 durch den Namen des Anmelders "gako" gebildet und oben auf der Deckelplatte 35 zwischen Befestigungsfortsatz 36 und Deckelrand 64 vor einem Außengewindebereich 54 angeordnet.

Die Fläche der Oberseite der Deckelplatte 35 ist durch eine als Deckelplattenflansch 76 ausgebildete erhöhte Umrandung begrenzt.

Der Deckelplattenflansch 76 und die Anschlagsfläche 72 des Befestigungsfortsatzes 36 sind so aufeinander abgestimmt, dass sie in der Befestigungsposition des Befestigungsfortsatzes 36 in dem Kruken-Befestigungsfortsatz-Befestigungsbereich 48 beide an der Unterseite des Hubarms 56 bzw. an der Anschlagsfläche 106 des Kruken-Befestigungsfortsatz-Befestigungsbereichs 48 anliegen.

An dem Deckelrand 64 befindet sich in radialer Richtung ausgehend von der Mit-telachse des Kruken-Deckels 34 eine Deckelrandprofilierung 68, mit der der Kruken-Deckel 34 sicher von einem Anwender gehalten werden kann, um den Kruken-Deckel durch Drehen auf einem Apotheken-Rezepturherstellungs-Kruken-Behältnis 32 zu befestigen. Die Deckelrandprofilierung 68 weist eine Mehrzahl von Rinnen auf, die sich in vertikaler Richtung ausgehend von der Deckelplatte 35 nach unten über den Deckelrand 64 erstrecken.

Figur 5 zeigt anhand ihrer Teilfigur 5a eine Draufsicht auf das vordere Ende des zweiten Hubarms 56 und auf den Befestigungsfortsatz 36 des Kruken-Deckels 34, der von unten in den Kruken-Befestigungsfortsatz-Befestigungsbereich 48 des zweiten Hubarms 56 eingeschoben ist, und anhand ihrer Teilfigur 5b eine Draufsicht auf das vordere Ende des zweiten Hubarms 56 und auf den Befestigungsfortsatz 36 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Dabei ist gut zu sehen, dass der Kruken-Befestigungsfortsatz-Befestigungsbereich 48 drei äquidistant zueinander angeordnete Innengewindebereiche 60 mit jeweils dazwischen angeordneten, insgesamt drei gewindefreien Innenflächen-Zwischenbereichen 61 aufweist. Ebenso ist gut zu sehen, dass der Befestigungs-Fortsatz 36 des Krukendeckels 34 eine zylindrische Wand aufweist, von der sich drei äquidistant zueinander angeordnete Außengewindebereiche 54 nach außen erstrecken, wobei zwischen jeweils benachbarten Außengewindebereichen 54 jeweils ein gewindefreier Außenflächen-Zwischenbereich 55 ausgebildet ist.

Die sich in vertikaler Richtung mittig durch den Befestigungsfortsatz 36 erstreckende Kruken-Zugangsöffnung 66, durch die der Rührstab 22 der Apotheken-Rezepturherstellungs-Vorrichtung 2 hindurchgeführt werden kann, und die somit einen Zugang zu dem unterhalb des Befestigungsfortsatzes 36 und der Deckelplatte 35 anordenbaren Krukenbehältnis 32 ermöglicht, ist in den nachfolgenden Figuren stets gut zu erkennen. Diese Kruken-Zugangsöffnung 66 wird radial nach außen von der Innenfläche der zylindrischen Wand des Befestigungsfortsatzes 36 begrenzt.

Die Befestigungsfortsatz-seitigen Außengewindebereiche 54 nehmen im gezeigten, nicht einschränkenden Ausführungsbeispiel jeweils Winkelbereiche von etwa 45° ein, und entsprechend nehmen die gewindefreien Außenflächen-Zwischenbereiche 55 jeweils Winkelbereiche von etwa 75° ein. Die Hubarm-seitigen Innengewindebereiche 60 nehmen im gezeigten, nicht einschränkenden Ausführungsbeispiel jeweils Winkelbereiche von etwa 60° ein, und entsprechend nehmen die gewindefreien Innenflächen-Zwischenbereiche 61 ebenfalls Winkelbereiche von etwa 60° ein.

Es hat sich gezeigt, dass wenn die Hubarm-seitigen gewindefreien Innenflächen-Zwischenbereiche 61 jeweils einen geringfügig größeren Winkelbereich einnehmen als die Befestigungsfortsatz-seitigen Außengewindebereiche 54, ein besonders einfaches Einschieben des Befestigungsfortsatzes 36 von unten in den Befestigungsfortsatz-Befestigungsbereich 48 ermöglicht wird.

Die Durchmesser der Außengewindebereiche 54, der gewindefreien Außenflächen-Zwischenbereiche 55, der Innengewindebereiche 60 und der gewindefreien Innenflächen-Zwischenbereiche 61 sind aufeinander abgestimmt. Der Durchmesser der gewindefreien Außenflächen-Zwischenbereiche 55 muss höchstens gleich groß, insbesondere etwas kleiner bemessen sein als der Durchmesser der Grate der Innengewindebereiche 60, und der Durchmesser der Grate der Außengewindebereiche 54 muss höchstens gleich, insbesondere etwas kleiner bemessen sein als der Durchmesser der gewindefreien Innenflächen-Zwischenbereiche 61. Zudem müssen die Innengewindebereiche 60 und die Außengewindebereiche 54 so aufeinander abgestimmt sein, dass diese beim Drehen von der Einschiebeposition in die Befestigungsposition über eine nicht zu kleine Eingreifhöhe ineinander eingreifen. Dadurch wird ein Einschieben des Befestigungsfortsatzes 36 in die Einschiebeposition und ein Verdrehen des Befestigungsfortsatzes 36 in die Befestigungsposition ermöglicht.

Die Außengewindebereiche 54 und die Innengewindebereiche 60 verfügen jeweils über mehrere, in Axialrichtung äquidistant übereinander angeordnete Gewindewandungen mit gleicher Steigung, und die Steigungsrichtung und der Steigungswinkel sind bei den Außenbewindebereichen 54 und bei den Innengewindebereichen 60 jeweils gleich.

Die Außengewindebereiche 54 und die Innengewindebereiche 60 haben jeweils Gewindewandungen mit in Umfangsrichtung gesehen konstanter Höhe.

Gemäß Figur 5b sind die Befestigungsfortsatz-seitigen Außengewindebereiche 54 durch Drehen des Befestigungsfortsatzes 36 um einen Winkel von etwa 60° in Steigungsrichtung der Außengewindebereiche 54 und der Innengewindebereiche 60 in Eingriff mit den Hubarm-seitigen Innengewindebereichen 50 gebracht worden.

Dabei ist gut zu sehen, dass die Außengewindebereiche 54, insbesondere die Gewindewandungen der Außengewindebereiche 54 über deren gesamte umfangsmäßige Breite in die Innengewindebereiche 60, insbesondere die Gewindewandlungen der Innengewindebereiche 60 eingreifen. An den umfangsmäßig äußeren Enden der Innengewindebereiche 60 kann jeweils noch ein kleiner Abschnitt verbleiben, an dem kein Außengewindebereich 54 eingreift. Mit anderen Worten nehmen die Außengewindebereiche 54 in der eingreifenden Befestigungsposition nicht die gesamte umfangsmäßige Breite der Innengewindebereiche 60 ein.

Figur 6 zeigt anhand ihrer Teilfigur 6a eine Draufsicht auf das vordere Ende des zweiten Hubarms 56 und auf einen Befestigungsfortsatz 136 des Kruken-Deckels 34, der von unten in den Kruken-Befestigungsfortsatz-Befestigungsbereich 48 des zweiten Hubarms 56 eingeschoben ist, und anhand ihrer Teilfigur 6b eine Draufsicht auf das vordere Ende des zweiten Hubarms 56 und auf den Befestigungsfortsatz 136 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 6a und die Befestigungsposition in Figur 6b entsprechen jeweils der Darstellung in Figur 5. Gleiche Elemente sind mit gleichen Bezugszeichen gekennzeichnet und werden zur Vermeidung von Wiederholungen nicht noch einmal erläutert.

Der einzige Unterschied liegt in dem Befestigungsfortsatz 136, der nicht wie der Befestigungsfortsatz 36 drei äquidistant zueinander angeordnete Außengewindebereiche 54 gleicher Breite und analog dazu drei äquidistant zueinander angeordnete gewindefreie Außenflächen-Zwischenbereiche 55 gleicher Breite aufweist.

Vielmehr hat der Befestigungsfortsatz 136 zwei benachbart zueinander angeordnete Außengewindebereiche 54 jeweils gleicher Breite, die im vorliegenden, nicht einschränkenden Ausführungsbeispiel jeweils 45° beträgt, und einen dritten schmaleren Außengewindebereich 86, dessen Breite nur etwa 10° beträgt.

Der zwischen den beiden Außengewindebereichen 54 größerer Breite angeordnete gewindefreie Außenflächen-Zwischenbereich 88 entspricht hinsichtlich der umfangsmäßigen Breite den gewindefreien Außenflächen-Zwischenbereichen 55 des Befestigungsfortsatzes 36 aus Figur 5. Dessen Breite ist wiederum etwa 75°.

Hingegen sind die gewindefreien Außenflächen-Zwischenbereiche 87 zwischen den beiden Außengewindebereichen 54 breiter ausgebildet und nehmen jeweils Winkelbereiche von etwa 90° ein.

In der in Figur 6b gezeigten Befestigungsposition nimmt der schmale Außengewindebereich 86 somit nur einen recht geringen Teil der umfangsmäßigen Breite des Innengewindebereichs 60 ein.

Figur 7 zeigt anhand ihrer Teilfigur 7a eine Draufsicht auf das vordere Ende des zweiten Hubarms 56 und auf einen Befestigungsfortsatz 236 des Kruken-Deckels 34, der von unten in den Kruken-Befestigungsfortsatz-Befestigungsbereich 48 des zweiten Hubarms 56 eingeschoben ist, und anhand ihrer Teilfigur 7b eine Draufsicht auf das vordere Ende des zweiten Hubarms 56 und auf den Befestigungsfortsatz 236 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 5a und die Befestigungsposition in Figur 8b entsprechen jeweils der Darstellung in Figur 6. Gleiche Elemente sind mit gleichen Bezugszeichen gekennzeichnet und werden zur Vermeidung von Wiederholungen nicht noch einmal erläutert.

Bei dem Befestigungsfortsatz 236 sind dessen Außengewindebereiche 86 wie bei dem Befestigungsfortsatz 36 aus Fig. 5 äquidistant zueinander angeordnet. Analog dazu weist der Befestigungsfortsatz 236 drei äquidistant zueinander angeordnete gewindefreie Außenflächen-Zwischenbereiche 87 auf.

Der einzige Unterschied liegt darin, dass die Außengewindebereiche 86 weniger breit ausgebildet sind als die Außengewindebereiche 54 aus Fig. 5 und eine Breite von nur etwa 10° einnehmen, wie der Außengewindebereich 86 aus Fig. 6 und daher auch mit dem gleichen Bezugszeichen gekennzeichnet sind, und dass dementsprechend die gewindefreien Außenflächen-Zwischenbereiche 88 breiter ausgebildet sind als die gewindefreien Außenflächen-Zwischenbereiche 55 aus Fig. 5 und mit dem Bezugszeichen 88 gekennzeichnet sind. Die gewindefreien Außenflächen-Zwischenbereiche 88 haben eine Breite von jeweils etwa 110°.

Figur 8 zeigt anhand ihrer Teilfigur 8a eine Draufsicht auf das vordere Ende des zweiten Hubarms 56 und auf einen Befestigungsfortsatz 336 des Kruken-Deckels 34, der von unten in den Kruken-Befestigungsfortsatz-Befestigungsbereich 48 des zweiten Hubarms 56 eingeschoben ist, und anhand ihrer Teilfigur 6b eine Draufsicht auf das vordere Ende des zweiten Hubarms 56 und auf den Befestigungsfortsatz 336 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 8a und die Befestigungsposition in Figur 8b entsprechen jeweils der Darstellung in Figur 5. Gleiche Elemente sind mit gleichen Bezugszeichen gekennzeichnet und werden zur Vermeidung von Wiederholungen nicht noch einmal erläutert.

Auch der Befestigungsfortsatz 336 entspricht weitgehend dem Befestigungsfortsatz 36 aus Figur 5, insbesondere hinsichtlich der Ausbildung seiner Außengewindebereiche 54. Gleiche Elemente sind daher mit gleichen Bezugszeichen gekennzeichnet und werden zur Vermeidung von Wiederholungen nicht noch einmal erläutert.

Der einzige Unterschied des Befestigungsfortsatzes 336 zu dem Befestigungsfortsatz 36 aus Figur 5 liegt darin, dass die gewindefreien Außenflächen-Zwischenbereiche keine zylindrische oder zylindersegmentförmige Außenform haben.

Vielmehr liegen die gewindefreien Außenflächen-Zwischenbereiche, die mit dem Bezugszeichen 90 gekennzeichnet sind, jeweils in einer Ebene, die parallel zur Längsachse des Befestigungsfortsatzes 336 verläuft und welche die umfangsmäßig äußeren Enden der jeweils benachbarten Außengewindebereiche 54, insbesondere die äußeren Enden der Gewindegangböden von jeweils zwei benachbarten Außengewindebereichen 54 miteinander verbindet.

Der Befestigungsfortsatz 336 hat demgemäß eine zylindersegment-förmige Innenwand, seine Außenform ähnelt - grob gesprochen - einem gleichseitigen Dreieck, dessen Seiten durch die gewindefreien Außenflächen-Zwischenbereiche 90 gebildet werden, mit den Außengewindebereichen 54 an den Übergangen zwischen jeweils zwei benachbarten gewindefreien Außenflächen-Zwischenbereichen 90.

Figur 9 zeigt anhand ihrer Teilfigur 9a eine Draufsicht auf das vordere Ende des zweiten Hubarms 56 und auf einen Befestigungsfortsatz 436 des Kruken-Deckels 34, der von unten in den Kruken-Befestigungsfortsatz-Befestigungsbereich 48 des zweiten Hubarms 56 eingeschoben ist, und anhand ihrer Teilfigur 6b eine Draufsicht auf das vordere Ende des zweiten Hubarms 56 und auf den Befestigungsfortsatz 436 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 9a und die Befestigungsposition in Figur 10b entsprechen jeweils der Darstellung in Figur 5. Gleiche Elemente sind mit gleichen Bezugszeichen gekennzeichnet und werden zur Vermeidung von Wiederholungen nicht noch einmal erläutert.

Auch der Befestigungsfortsatz 436 entspricht weitgehend dem Befestigungsfortsatz 36 aus Figur 6, insbesondere hinsichtlich der Ausbildung seiner gewindefreien Außenflächen-Zwischenbereichen 55 und hinsichtlich der Ausbildung von zwei seiner Außengewindebereiche 54. Gleiche Elemente sind daher mit gleichen Bezugszeichen gekennzeichnet und werden zur Vermeidung von Wiederholungen nicht noch einmal erläutert.

Der einzige Unterschied des Befestigungsfortsatzes 436 zu dem Befestigungsfortsatz 36 aus Figur 5 liegt darin, dass der dritte Außengewindebereich in Form von zwei Außengewindebereichs-Teilabschnitten 92 mit umfangsmäßig dazwischen angeordneter Außengewindebereichs-Unterbrechung 84 ausgebildet ist. Die umfangsmäßige Breite der beiden Außengewindebereichs-Teilabschnitte 92 und der dazwischen angeordneten Außengewindebereichs-Unterbrechung 94 entspricht dabei der Breite eines Außengewindebereichs 54 und beträgt im vorliegenden nicht einschränkenden Ausführungsbeispiel 45°. Die beiden Außengewindebereichs-Teilabschnitte 92 nehmen jeweils einen Winkelbereich von etwa 20° ein, und die Außengewinde-Bereichs-Unterbrechung 94 nimmt einen Winkelbereich von etwa 5° ein.

Die Gewindewandungen der Außengewindebereichs-Teilabschnitte 92 sind in Verlängerung zueinander angeordnet und haben den gleichen Steigungswinkel und die gleiche Gewindewandungs-Höhe wie die Gewindewandungen der anderen Außengewindebereiche 54.

Figur 10 zeigt anhand ihrer Teilfigur 10a eine Draufsicht auf das vordere Ende des zweiten Hubarms 56 und auf einen Befestigungsfortsatz 436 des Kruken-Deckels 34, der von unten in den Kruken-Befestigungsfortsatz-Befestigungsbereich 48 des zweiten Hubarms 56 eingeschoben ist, und anhand ihrer Teilfigur 10b eine Draufsicht auf das vordere Ende des zweiten Hubarms 56 und auf den Befestigungsfortsatz 436 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 10a und die Befestigungsposition in Figur 10b entsprechen jeweils der Darstellung in Figur 5. Gleiche Elemente sind mit gleichen Bezugszeichen gekennzeichnet und werden zur Vermeidung von Wiederholungen nicht noch einmal erläutert.

Der Befestigungsfortsatz 536 entspricht weitgehend dem Befestigungsfortsatz 436 aus Figur 9, insbesondere hinsichtlich der Ausbildung seiner gewindefreien Außenflächen-Zwischenbereiche 55. Gleiche Elemente sind daher mit gleichen Bezugszeichen gekennzeichnet und werden zur Vermeidung von Wiederholungen nicht noch einmal erläutert.

Im Unterschied zu dem Befestigungsfortsatz 436 sind bei dem Befestigungsfortsatz 536 alle drei Außengewindebereiche in Form von zwei Außengewindebereichs-Teilabschnitten 92 mit umfangsmäßig dazwischen angeordneter Außengewindebereichs-Unterbrechung 94 ausgebildet. Die umfangsmäßige Breite der beiden Außengewindebereichs-Teilabschnitte 92 und der dazwischen angeordneten Außengewindebereichs-Unterbrechung 94 jedes Außengewindebereichs beträgt im vorliegenden nicht einschränkenden Ausführungsbeispiel jeweils 45°. Die beiden Außengewindebereichs-Teilabschnitte 92 nehmen jeweils einen Winkelbereich von etwa 20° ein, und die Außengewinde-Bereichs-Unterbrechung 94 nimmt einen Winkelbereich von etwa 5° ein.

Figur 11 zeigt anhand ihrer Teilfigur 11a eine Draufsicht auf das vordere Ende des zweiten Hubarms 56 und auf einen Befestigungsfortsatz 636 des Kruken-Deckels 34, der von unten in den Kruken-Befestigungsfortsatz-Befestigungsbereich 48 des zweiten Hubarms 56 eingeschoben ist, und anhand ihrer Teilfigur 11b eine Draufsicht auf das vordere Ende des zweiten Hubarms 56 und auf den Befestigungsfortsatz 636 des Kruken-Deckels 34, der von unten in den Kruken-Befestigungsfortsatz-Befestigungsbereich 48 des zweiten Hubarms 56 eingeschoben und in die Befestigungsposition verdreht ist, bei der die Befestigungsfortsatz-seitigen Außengewindebereiche 54 in die Hubarm-seitigen Innengewindebereiche 60 eingreifen.

Der zweite Hubarm 56 mit seinem Kruken-Befestigungsfortsatz-Befestigungsbereich 48 und sowie die Einschiebeposition in Figur 11a und die Befestigungsposition in Figur 11b entsprechen jeweils der Darstellung in Figur 5. Gleiche Elemente sind mit gleichen Bezugszeichen gekennzeichnet und werden zur Vermeidung von Wiederholungen nicht noch einmal erläutert.

Der Befestigungsfortsatz 636 entspricht weitgehend dem Befestigungsfortsatz 36 aus Figur 5, wobei zwei der Außengewindebereiche 54 und der von diesen beiden Außengewindebereichen 54 eingeschlossene gewindefreie Außenflächen-Zwischenbereich 55 identisch zu den entsprechenden Elementen des Befestigungsfortsatzes 36 ist.

Im Unterschied zu dem Befestigungsfortsatz 36 fehlt bei dem Befestigungsfortsatz 636 jedoch ein dritter Außengewindebereich. Anstelle dessen ist ein breiter gewindefreier Außenflächen-Zwischenbereich 96 vorgesehen, der zwischen den Außengewindebereichen 54 auf der anderen Seite des gewindefreien Außenflächen-Zwischenbereichs 55 angeordnet ist und der einen Winkelbereich von insgesamt etwa 195° einnimmt.

In der in Figur 11b gezeigten Befestigungsposition ist gut zu sehen, dass die zwei Außengewindebereiche 54 jeweils in zwei benachbarte Innengewindebereiche 60, in der Figur 12b in den oben und in den links unten zu sehenden Innengewindebereich 60 eingreifen, und dass gegenüber dem rechts unten liegenden Innengewindebereich 60 kein Eingreifen erfolgt.

Insbesondere, wenn die Oberseite der Krukendeckel-Platte an die Unterseite des Hubarms anschlägt, ist eine derartige Befestigung mit nur zwei Außengewindebereichen 54 ausreichend sicher.

Figur 12 zeigt anhand ihrer Teilfigur 12a eine Draufsicht auf das vordere Ende eines dritten Hubarms 100 und auf einen Befestigungsfortsatz 736 des Kruken-Deckels 34, der von unten in den Kruken-Befestigungsfortsatz-Befestigungsbereich 48 des dritten Hubarms 100 eingeschoben ist, und anhand ihrer Teilfigur 12b eine Draufsicht auf das vordere Ende des dritten Hubarms 100 und auf den Befestigungsfortsatz 736 des Kruken-Deckels 34, der von unten in den Kruken-Befestigungsfortsatz-Befestigungsbereich 48 des dritten Hubarms 100 eingeschoben und in die Befestigungsposition verdreht ist, bei der die Befestigungsfortsatz-seitigen Außengewindebereiche 154 in die Hubarm-seitigen Innengewindebereiche 160 eingreifen.

Der Befestigungs-Fortsatz-Befestigungsbereich 48 des dritten Hubarms 100 weist wiederum drei äquidistant zueinander angeordnete Innengewindebereiche 160 mit jeweils dazwischen angeordneten, insgesamt drei gewindefreien Innenflächen-Zwischenbereichen 161 auf. Der Befestigungs-Fortsatz 736 des Krukendeckels 34 weist eine zylindrische Wand auf, von der sich drei äquidistant zueinander angeordnete Außengewindebereiche 154 nach außen erstrecken, wobei zwischen jeweils benachbarten Außengewindebereichen 154 jeweils ein gewindefreier Außenflächen-Zwischenbereich 155 ausgebildet ist.

Anders als die Außengewindebereiche 54 des Befestigungsfortsatzes 36 aus Figur 5, haben die Außengewindebereiche 154 des Befestigungsfortsatzes 736, insbesondere deren Gewindewandungen keine gleichbleibende Höhe über deren gesamte umfangsmäßige Breite.

Vielmehr haben die Außengewindebereiche 154 einen umfangsmäßig mittleren Außengewindebereichs-Abschnitt, in denen die Gewindewandungen eine gleichbleibende Höhe, radial gemessen zur gekrümmten Ebene der Befestigungsfortsatz-Außenfläche oder zu dem Gewindegang-Boden, aufweisen, und zwei in beide Umfangsrichtungen daran anschließende umfangsmäßig äußere Außengewindebereichs-Abschnitte, in denen die Höhe der Gewindewandungen, wiederum radial gemessen zu gekrümmten Ebene der Befestigungsfortsatz-Außenfläche oder zu dem Gewindegang-Boden, abnimmt und zwar vom umfangsmäßig inneren, zu dem mittleren Außengewindebereichs-Abschnitt gerichteten Ende, zum umfangsmäßig äußeren Ende des jeweiligen äußeren Außengewindebereichs-Abschnitts. Das umfangsmäßig äußere Ende des jeweiligen äußeren Außengewindebereichs-Abschnitts geht dort in die gekrümmte Ebene der Befestigungsfortsatz-Außenfläche über, und dessen Höhe ist dort Null.

Die umfangsmäßige Breite der Außengewindebereiche 154, einschließlich des mittleren Außengewindebereichs-Abschnitts und einschließlich der beiden äußeren Außengewindebereichs-Abschnitte, ist etwa 30-40°. Dementsprechend ist die umfangsmäßige Breite der Gewinde der gewindefreien Außenflächen-Zwischenbereiche 155 etwa 80-90°.

Ebenso haben die Innengewindebereiche 160 keine über deren gesamte umfangsmäßige Breite gleichbleibende Höhe. Vielmehr gliedern sich diese Innengewindebereiche in einen umfangsmäßig mittleren Innengewindebereichs-Abschnitt, in dem die Gewindewandungen eine gleichbleibende Höhe, radial gemessen zur gekrümmten Ebene der Innenfläche des Kruken-Befestigungsfortsatz-Befestigungsbereichs 48 oder zu dem Gewindegang-Boden, aufweisen, und zwei zu beiden Seiten umfangsmäßig daran anschließende äußere Innengewindebereichs-Abschnitte, in welchen die Höhe der Gewindewandungen, radial gemessen zu gekrümmten Ebene der Innenfläche des Kruken-Befestigungsfortsatz-Befestigungsbereichs 48 oder zu dem Gewindegang-Boden, abnimmt, und zwar so, dass das umfangsmäßig äußere Ende des jeweiligen äußeren Innengewindebereichs-Abschnitts in die gekrümmte Ebene der Innenfläche des Kruken-Befestigungsfortsatz-Befestigungsbereichs 48 übergeht und dessen Höhe dort Null ist, wiederum gemessen radial zur gekrümmten Ebene der Innenfläche des Kruken-Befestigungsfortsatz-Befestigungsbereichs 48 oder zu dem Gewindegang-Boden.

Die umfangsmäßige Breite der Innengewindebereiche 160, einschließlich des mittleren Innengewindebereichs-Abschnitts und der umfangsmäßig äußeren Innengewindebereichs-Abschnitte ist etwa 60°. Dementsprechend ist auch die umfangsmäßige Breite der gewindefreien Innenflächen-Zwischenbereiche 161 jeweils etwa 60°.

Es hat sich gezeigt, dass wenn die Hubarm-seitigen gewindefreien Innenflächen-Zwischenbereiche 161 jeweils einen geringfügig größeren Winkelbereich einnehmen als die Befestigungsfortsatz-seitigen Außengewindebereiche 154, ein besonders einfaches Einschieben des Befestigungsfortsatzes 736 von unten in den Befestigungsfortsatz-Befestigungsbereich 48 ermöglicht wird.

Die Durchmesser der Außengewindebereiche 154, der gewindefreien Außenflächen-Zwischenbereiche 155, der Innengewindebereiche 160 und der gewindefreien Innenflächen-Zwischenbereiche 161 sind aufeinander abgestimmt. Der Durchmesser der gewindefreien Außenflächen-Zwischenbereiche 155 muss höchstens gleich groß, insbesondere etwas kleiner bemessen sein als der Durchmesser der Grate der Innengewindebereiche 160, und der Durchmesser der Grate der Außengewindebereiche 154 muss höchstens gleich, insbesondere etwas kleiner bemessen sein als der Durchmesser der gewindefreien Innenflächen-Zwischenbereiche 161. Zudem müssen die Innengewindebereiche 160 und die Außengewindebereiche 154 so aufeinander abgestimmt sein, dass diese beim Drehen von der Einschiebeposition in die Befestigungsposition über eine nicht zu kleine Eingreifhöhe ineinander eingreifen. Dadurch wird ein Einschieben des Befestigungsfortsatzes 736 in die Einschiebeposition und ein Verdrehen des Befestigungsfortsatzes 736 in die Befestigungsposition ermöglicht.

Die Außengewindebereiche 154 und die Innengewindebereiche 160 verfügen jeweils über mehrere, in Axialrichtung äquidistant übereinander angeordnete Gewindewandungen mit gleicher Steigung, und die Steigungsrichtung und der Steigungswinkel sind bei den Außengewindebereichen 154 und bei den Innengewindebereichen 160 jeweils gleich.

Gemäß Figur 12b sind die Befestigungsfortsatz-seitigen Außengewindebereiche 154 durch Drehen des Befestigungsfortsatzes 736 um einen Winkel von etwa 60° in Steigungsrichtung der Außengewindebereiche 154 und der Innengewindebereiche 160 in Eingriff mit den Hubarm-seitigen Innengewindebereichen 150 gebracht worden.

Dabei ist gut zu sehen, dass die Außengewindebereiche 154, insbesondere die Gewindewandungen der Außengewindebereiche 154 über deren gesamte umfangsmäßige Breite in die Innengewindebereiche 160, insbesondere die Gewindewandungen der Innengewindebereiche 160 eingreifen. An den umfangsmäßig äußeren Enden der Innengewindebereiche 160 kann jeweils noch ein kleiner Abschnitt verbleiben, an dem kein Außengewindebereich 154 eingreift. Mit anderen Worten nehmen die Außengewindebereiche 154 in der eingreifenden Befestigungsposition nicht die gesamte umfangsmäßige Breite der Innengewindebereiche 160 ein.

Figur 13 zeigt einen Querschnitt durch den Kruken-Befestigungsfortsatz-Befestigungsbereich 48 des zweiten Hubarms 56.

Der Kruken-Befestigungsfortsatz-Befestigungsbereich 48 weist einen oberen, im Wesentlichen zylindrischen Aussparungsbereich 102 und einen unteren, im Wesentlichen zylindrischen Aussparungsbereich 104 größeren Durchmessers aufweist, wobei am Übergang zwischen dem unteren und dem oberen im Wesentlichen zylindrischen Aussparungsbereich 102, 104 eine nach unten gerichtete, insbesondere ringförmige Anschlagsfläche 106 ausgebildet ist, die einen Anschlag für eine Anschlagsfläche des Befestigungsfortsatzes 36 des Apotheken-Rezepturherstellungs-Kruken-Deckels 34 bildet. Der obere Aussparungsbereich 102 weist an seiner Innenfläche drei in Umfangsrichtung voneinander beabstandete Innengewindebereiche 60 mit jeweils 2 Gewindewandungen auf, von denen in Figur 13 ein Innengewindebereich 60 hinter der Schnittebene und nach vorne aus der Zeichnungsebene weisend und zwei Innengewindebereiche 60 links und rechts in der Schnittebene zu sehen sind. Diese Anschlagsfläche definiert in vertikaler Richtung gesehen die endgültige Befestigungsposition.

Diese wird erreicht, wenn der Kruken-Deckel 34 zunächst in vertikaler Richtung eingeschoben wird, in einer Drehposition in der die Außengewindebereiche 54 fluchtend mit den gewindefreien Innenflächen 61 des Kruken-Befestigungsfortsatz-Befestigungsbereichs 48 des Hubarms 56 angeordnet sind, und danach in die Befestigungsposition gedreht wird, in der die Außengewindebereiche 54 in die Innengewindebereiche 60 eingreifen, bis die Befestigungsfortsatz-seitige Anschlagsfläche an der Anschlagsfläche 106 des Kruken-Befestigungsfortsatz-Befestigungsbereichs anliegt.

In einem weiteren nicht gezeigten Ausführungsbeispiel ist in vertikaler Richtung gesehen am oberen Ende des oberen, im Wesentliche zylindrischen Aussparungsbereich des Kruken-Befestigungsfortsatz-Befestigungsbereich ein Einschraub-Begrenzungsbereich angeordnet, der einen geringeren Durchmesser aufweist als der Kruken-Befestigungsfortsatz-Befestigungsbereich und der eine nach unten gerichtete Einschraub-Begrenzungsfläche ausbildet, an der die Anschlagsfläche des Befestigungsfortsatzes des Apotheken-Rezepturherstellungs-Kruken-Deckels anschlägt, sobald der Apotheken-Rezepturherstellungs-Kruken-Deckel sich in seiner Befestigungsposition befindet, in der die Außengewindebereiche in die Innengewindebereiche eingreifen.

Die vorliegenden Ausführungsbeispiele sind mit Bezug auf einen Krukendeckel beschrieben worden. Ein Krukenboden kann ebenfalls einen derartigen Befestigungsfortsatz bzw. einen Befestigungskörper aufweisen, der an seiner Außenseite ebenso ausgebildet ist. Dieser Ausführungsformen sind ausdrücklich auch von der vorliegenden Patentanmeldung mit umfasst. Sie sind in dem allgemeinen Beschreibungsteil im Einzelnen erläutert und von den beigefügten Patentansprüchen mit abgedeckt.

### Bezugszeichenliste

- 2: Apotheken-Rezepturherstellungs-Vorrichtung
- 4: Standeinheit
- 6: Sockelbereich
- 8: Mittelbereich
- 10: Kopfbereich
- 12: Hubeinheit
- 14: Hub-Bewegungsrichtung
- 20: Rühreinheit
- 22: Rührstab
- 24: Rührwerkzeug
- 26: Rotations-Bewegungsrichtung
- 28: Apotheken-Rezepturherstellungs-Vorrichtungs-Hubarm
- 30: Kruken-Befestigungsfortsatz-Befestigungsbereich
- 31: Apotheken-Rezepturherstellungs-Kruke
- 32: Apotheken-Rezepturherstellungs-Kruken-Behältnis
- 34: Apotheken-Rezepturherstellungs-Kruken-Deckel
- 35: Deckelplatte
- 36: Befestigungsfortsatz
- 38: länglicher Grundkörper
- 40: erstes Längsende
- 42: zweites Längsende
- 44: Befestigungs-Klaue
- 46: Klauenfortsätze
- 48: Kruken-Befestigungsfortsatz-Befestigungsbereich
- 52: Rührstab-Einschiebebereich
- 54: Außengewindebereich
- 55: gewindefreier Außenflächen-Zwischenbereich
- 56: zweiter Apotheken-Rezepturherstellungs-Vorrichtungs-Hubarm
- 58: Anschlagsfläche
- 60: Innengewindebereich
- 61: gewindefreier Innenflächen-Zwischenbereich
- 64: Deckelrand
- 66: Kruken-Zugangsöffnung
- 68: Deckelrandprofilierung
- 70: Sockelbereich
- 72: Anschlagsfläche
- 74: Befestigungsbereich
- 76: Deckelplattenflansch
- 78: Positionierungs-Markierung
- 86: schmaler Außengewindebereich
- 87: gewindefreier Außenflächen-Zwischenbereich
- 88: gewindefreier Außenflächen-Zwischenbereich
- 90: gewindefreier Außenflächen-Zwischenbereich
- 92: Außengewindebereichs-Teilabschnitt
- 94: Außengewindebereichs-Unterbrechung
- 96: breiter gewindefreier Außenflächen-Zwischenbereich
- 98: abgerundeter Innengewindebereich
- 100: dritter Hubarm
- 102: oberer Aussparungsbereich
- 104: unterer Aussparungsbereich
- 106: Anschlagsfläche
- 136: Befestigungsfortsatz
- 154: Außengewindebereich
- 155: gewindefreier Außenflächen-Zwischenbereich
- 160: Innengewindebereich
- 161: gewindefreier Innenflächen-Zwischenbereich
- 236: Befestigungsfortsatz
- 336: Befestigungsfortsatz
- 436: Befestigungsfortsatz
- 536: Befestigungsfortsatz
- 636: Befestigungsfortsatz
- 736: Befestigungsfortsatz

## Patentansprüche

1. Apotheken-Rezepturherstellungs-Kruken-Deckel (34) oder Apotheken-Rezepturherstellungs-Kruken-Boden einer Apotheken-Rezepturherstellungs-Kruke (31) zum Herstellen eines pharmazeutischen Individual-Produkts in einer Apotheke, wobei der Apotheken-Rezepturherstellungs-Kruken-Deckel (34) oder der Apotheken-Rezepturherstellungs-Kruken-Boden zum aufschraubenden, lösbaren Schnellbefestigen an einem Apotheken-Rezepturherstellungs-Vorrichtungs-Hubarm (56) für eine Apotheken-Rezepturherstellungs-Vorrichtung (2) zum Herstellen eines pharmazeutischen Individual-Produkts ausgebildet ist, aufweisend:
eine Deckelplatte (35) bzw. eine Bodenplatte;
wobei die Deckelplatte (35) bzw. Bodenplatte einen im Wesentlichen zylindrischen, sich von der Deckelplatte (35) nach oben bzw. sich von der Bodenplatte nach unten erstreckenden und innen hohlen, einen Zugang zu dem unterhalb der Deckelplatte (35) bzw. oberhalb der Bodenplatte liegenden Bereich der Apotheken-Rezepturherstellungs-Kruke (31) erlaubenden Befestigungsfortsatz (36) zur lösbaren Befestigung des Apotheken-Rezepturherstellungs-Kruken-Deckels (34) an einem Hubarm der Apotheken-Rezepturherstellungs-Vorrichtung (2) aufweist;
**dadurch gekennzeichnet, dass**
der Befestigungsfortsatz (36) an seiner Außenfläche (84) wenigstens zwei in Umfangsrichtung voneinander beabstandete Außengewindebereiche (54) aufweist;
und, dass
der Apotheken-Rezepturherstellungs-Kruken-Deckel oder Apotheken-Rezepturherstellungs-Kruken-Boden weiterhin eine Positionierungs-Markierung (78) auf der Oberseite der Deckelplatte (35) bzw. auf der Unterseite der Bodenplatte aufweist, zur Angabe der rotationsmäßigen Einbring-Position des Apotheken-Rezepturherstellungs-Kruken-Deckels (34) oder Apotheken-Rezepturherstellungs-Kruken-Bodens gegenüber einem Apotheken-Rezepturherstellungs-Vorrichtungs-Hubarm (56).

2. Apotheken-Rezepturherstellungs-Kruken-Deckel (34) oder Apotheken-Rezepturherstellungs-Kruken-Boden nach Anspruch 1, wobei die Außengewindebereiche (54) jeweils mehrere, insbesondere 2 bis 10, in Axialrichtung gesehen, äquidistant übereinander angeordnete Gewindewandungen mit gleicher Steigung aufweisen.

3. Apotheken-Rezepturherstellungs-Kruken-Deckel (34) oder Apotheken-Rezepturherstellungs-Kruken-Boden nach Anspruch 1 oder 2, wobei zwischen jeweils zwei in Umfangsrichtung voneinander beabstandeten Außengewindebereichen (54) ein gewindefreier Außenflächen-Zwischenbereich (55) angeordnet ist; und/oder
aufweisend drei in Umfangsrichtung voneinander beabstandete Außengewindebereiche (54) mit jeweils dazwischen angeordneten, gewindefreien Außenflächen-Zwischenbereichen (55); und/oder wobei die Außengewindebereiche (54) jeweils einen Winkelbereich von 10 - 90°, insbesondere 50 - 70° einnehmen; und/oder
wobei wenigstens einer der Außengewindebereiche (54) einen umfangsmäßig mittleren Außengewindebereichs-Abschnitt und zwei zu beiden Seiten in Umfangsrichtung daran anschließende, umfangsmäßig äußere Außengewindebereichs-Abschnitte aufweist

4. Apotheken-Rezepturherstellungs-Kruken-Deckel (34) oder Apotheken-Rezepturherstellungs-Kruken-Boden nach Anspruch 3, wobei wenigstens eine Gewindewandung im umfangsmäßig mittleren Außengewindebereichs-Abschnitt eine gleichbleibende Höhe, radial gemessen zur gekrümmten Ebene der Befestigungsfortsatz-Außenfläche oder zu dem Gewindegangboden aufweist; und/oder
wobei die Höhe der Gewindewandungen in den umfangsmäßig äußeren Außengewindebereichs-Abschnitten, radial gemessen zur gekrümmten Ebene der Befestigungsfortsatz-Außenfläche oder zu dem Gewindegangboden, vom umfangsmäßig inneren, zum mittleren Außengewindebereichs-Abschnitt gerichteten Ende zum umfangsmäßig äußeren Ende des jeweiligen äußeren Außengewindebereichs-Abschnitts abnimmt, und insbesondere so abnimmt, dass das umfangsmäßig äußere Ende des jeweiligen äußeren Außengewindebereichs-Abschnitts in die gekrümmte Ebene der Befestigungsfortsatz-Außenfläche übergeht und/oder dessen Höhe, radial gemessen zur gekrümmten Ebene der Befestigungsfortsatz-Außenfläche, Null ist.

5. Apotheken-Rezepturherstellungs-Kruken-Deckel (34) oder Apotheken-Rezepturherstellungs-Kruken-Boden nach einem der vorhergehenden Ansprüche, wobei wenigstens einer der Außengewindebereiche (54) wenigstens eine Gewindewandung mit gleichbleibender Höhe, radial gemessen zur gekrümmten Ebene der Befestigungsfortsatz-Außenfläche oder zu dem Gewindegangboden, aufweist; und/oder
wobei ein Außengewindebereich (54) als Paar von zwei in Umfangsrichtung unterbrochenen Außengewindebereichssegmenten ausgebildet ist.

6. Apotheken-Rezepturherstellungs-Kruken-Deckel (34) oder Apotheken-Rezepturherstellungs-Kruken-Boden nach einem der Ansprüche 3 bis 5, wobei die gewindefreien Außenflächen-Zwischenbereiche Zylindersegment-förmig ausgebildet sind oder eine gekrümmte Form, gesehen in einem radialen Querschnitt, aufweisen, oder wobei die gewindefreien Außenflächen-Zwischenbereiche (55) jeweils eine parallel zur Längsachse des Befestigungsfortsatzes (36) verlaufende Ebene bilden, welche die umfangsmäßig äußeren Ende von jeweils benachbarten Außengewindebereichen (54) miteinander verbindet.

7. Apotheken-Rezepturherstellungs-Kruken-Deckel (34) oder Apotheken-Rezepturherstellungs-Kruken-Boden nach einem der vorhergehenden Ansprüche, wobei die Außengewindebereiche (54) jeweils, in Umfangsrichtung gesehen, äquidistant zueinander angeordnet sind und jeweils gleich große Winkelbereiche einnehmen, oder wobei ein Außengewindebereich (54), in Umfangsrichtung gesehen, einen geringeren Winkelbereich einnimmt, als wenigstens ein weiterer Außengewindebereich (54); und/oder
weiterhin aufweisend einen umlaufenden, sich von der Deckelplatte (35) nach unten erstreckenden Deckelrand (64) mit Innengewinde, zum aufschraubenden Befestigen an einem Apotheken-Rezepturherstellungs-Kruken-Behältnis (32), bzw. einen umlaufenden, sich von der Bodenplatte nach oben erstreckenden Bodenrand mit Innengewinde, zum aufschraubenden Befestigen an einem Apotheken-Rezepturherstellungs-Kruken-Behältnis (32).

8. Apotheken-Rezepturherstellungs-Kruken-Boden nach einem der Ansprüche 1 bis 7, wobei der Befestigungsfortsatz (36) einen unteren, im Wesentlichen zylindrischen Befestigungsbereich und einen oberen, im Wesentlichen zylindrischen Sockelbereich größeren Durchmessers aufweist, wobei am Übergang zwischen dem oberen Sockelbereich und dem unteren Befestigungsbereich eine nach unten gerichtete, insbesondere ringförmige Anschlagsfläche (72) ausgebildet ist, die einen Anschlag für eine Anschlagsfläche (58) eines Kruken-Befestigungsfortsatz-Befestigungsbereichs (30) bildet; und/oder wobei der untere Befestigungsbereich an seiner Außenfläche wenigstens zwei in Umfangsrichtung voneinander beabstandete Außengewindebereiche (54) aufweist; und/oder
wobei der untere, im Wesentlichen zylindrische Befestigungsbereich an seiner nach unten gerichteten Seite eine insbesondere ringförmige Anschlagsfläche aufweist, die einen Anschlag für eine Einschraub-Begrenzungsfläche eines Einschraub-Begrenzungsbereichs bildet.

9. Apotheken-Rezepturherstellungs-Vorrichtungs-Hubarm (56) für eine Apotheken-Rezepturherstellungs-Vorrichtung (2) zum Herstellen eines pharmazeutischen Individual-Produkts,
wobei der Apotheken-Rezepturherstellungs-Vorrichtungs-Hubarm (56) zum aufschraubenden, lösbaren Schnellbefestigen eines Apotheken-Rezepturherstellungs-Kruken-Deckels (34) oder eines Apotheken-Rezepturherstellungs-Kruken-Bodens nach einem der Ansprüche 1 bis 8 daran ausgebildet ist,
aufweisend:
einen im Wesentlichen länglichen Grundkörper mit einem an oder nahe dem vorderen Längsende des Grundkörpers vorgesehenen Kruken-Befestigungsfortsatz-Befestigungsbereich (48) für einen Befestigungsfortsatz (36) eines Apotheken-Rezepturherstellungs-Kruken-Deckels (34), eines Apotheken-Rezepturherstellungs-Kruken-Bodens, eines Apotheken-Rezepturherstellungs-Kruken-Adapters oder einer Apotheken-Rezepturherstellungs-Kruke (31);
wobei der Kruken-Befestigungsfortsatz-Befestigungsbereich (48) als sich von der Unterseite zur Oberseite des Grundkörpers erstreckende Aussparung ausgebildet ist;
**dadurch gekennzeichnet, dass**
der Kruken-Befestigungsfortsatz-Befestigungsbereich (48) an seiner Innenfläche wenigstens zwei in Umfangsrichtung voneinander beabstandete Innengewindebereiche (50) aufweist; und
der Apotheken-Rezepturherstellungs-Vorrichtungs-Hubarm einen Entnahmepositions-Hinweisstift aufweist, der sich von der Unterseite des Hubarms in vertikaler Richtung nach unten erstreckt.

10. Apotheken-Rezepturherstellungs-Vorrichtungs-Hubarm (56) nach Anspruch 9, wobei die Innengewindebereiche jeweils mehrere, insbesondere 2 bis 10, in Axialrichtung gesehen, äquidistant übereinander angeordnete Gewindewandungen mit gleicher Steigung aufweisen; und/oder
wobei der Kruken-Befestigungsfortsatz-Befestigungsbereich (48) eine im Wesentlichen zylindrische Gestalt hat; und/oder
wobei der Entnahmepositions-Hinweisstift sich von der Unterseite des Hubarms bis zu 4mm in vertikaler Richtung nach unten erstreckt; und/oder
wobei der Entnahmepositions-Hinweisstift nahe dem Kruken-Befestigungsfortsatz-Befestigungsbereich (48) in radialer Richtung weg so angeordnet ist, dass dieser beim Schnellbefestigen eines Kruken-Deckels (34) oder Kruken-Bodens in dem Kruken-Befestigungsfortsatz-Befestigungsbereich (48) zwischen der Deckelplatte des Kruken-Deckels (34) oder der Bodenplatte des Kruken-Bodens und der Unterseite des Apotheken-Rezepturherstellungs-Vorrichtungs-Hubarms (56) angeordnet ist; und/oder
wobei der Kruken-Befestigungsfortsatz-Befestigungsbereich (48) einen oberen, im Wesentlichen zylindrischen Aussparungsbereich (102) und einen unteren, im Wesentlichen zylindrischen Aussparungsbereich (104) größeren Durchmessers aufweist, wobei am Übergang zwischen dem unteren und dem oberen im Wesentlichen zylindrischen Aussparungsbereich eine nach unten gerichtete, insbesondere ringförmige Anschlagsfläche (106) ausgebildet ist, die einen Anschlag für eine Anschlagsfläche (72) des Befestigungsfortsatzes (36) des Apotheken-Rezepturherstellungs-Kruken-Deckels (34), des Apotheken-Rezepturherstellungs-Kruken-Bodens oder des Apotheken-Rezepturherstellungs-Kruken-Adapters bildet; und/oder wobei der obere Aussparungsbereich an seiner Innenfläche wenigstens zwei in Umfangsrichtung voneinander beabstandete Innengewindebereiche (60) aufweist; und/oder
wobei der Kruken-Befestigungsfortsatz-Befestigungsbereich (48) am oberen Ende des oberen, im Wesentlichen zylindrischen Aussparungsbereich einen Einschraub-Begrenzungsbereich aufweist, der einen geringeren Innendurchmesser aufweist als der Innendurchmesser des Innengewindebereichs; und/oder wobei der Einschraub-Begrenzungsbereich eine Einschraub-Begrenzungsfläche an seiner Unterseite in Richtung des unteren, im Wesentlichen zylindrischen Aussparungsbereich ausbildet; und/oder wobei die Einschraub-Begrenzungsfläche einen Anschlag für die Anschlagsfläche des Befestigungsfortsatzes (36) bildet.

11. Apotheken-Rezepturherstellungs-Vorrichtungs-Hubarm (28) nach einem der Ansprüche 9 oder 10, weiterhin aufweisend eine Befestigungs-Klaue (44) mit zwei Klauenfortsätzen (46), wobei die Befestigungs-Klaue (44) den Kruken-Befestigungsfortsatz-Klauenbefestigungsbereich aufweist, der als sich von der Unterseite zur Oberseite des Grundkörpers erstreckende Aussparung ausgebildet ist und der sich von dem vorderen Längsende des Grundkörpers zu dem Kruken-Befestigungsfortsatz-Befestigungsbereich (48) erstreckt.

12. Apotheken-Rezepturherstellungs-Vorrichtungs-Hubarm (56) nach einem der Ansprüche 9 bis 11, wobei wenigstens einer der Innengewindebereiche (60) einen umfangsmäßig mittleren Innengewindebereichs-Abschnitt und zwei zu beiden Seiten in Umfangsrichtung daran anschließende, umfangsmäßig äußere Innengewindebereichs-Abschnitte aufweist;
wobei insbesondere die Höhe der Gewindewandungen in den umfangsmäßig äußeren Innengewindebereichs-Abschnitten, radial gemessen zur gekrümmten Ebene der Innenfläche des Kruken-Befestigungsfortsatz-Befestigungsbereichs (48) oder zu dem Gewindegangboden, vom umfangsmäßig inneren, zum mittleren Innengewindebereichs-Abschnitt gerichteten Ende zum umfangsmäßig äußeren Ende des jeweiligen äußeren Innengewindebereichs-Abschnitts abnimmt, und insbesondere so abnimmt, dass das umfangsmäßig äußere Ende des jeweiligen äußeren Innengewindebereichs-Abschnitts in die gekrümmten Ebene der Innenfläche des Kruken-Befestigungsfortsatz-Befestigungsbereichs (48) übergeht und/ oder dessen Höhe, radial gemessen zur gekrümmten Ebene der Innenfläche des Kruken-Befestigungsfortsatz-Befestigungsbereichs (48), Null ist.

13. Apotheken-Rezepturherstellungs-Vorrichtungs-Hubarm (28) nach Amspruch 11 oder 12, wobei, im Falle, dass eine Befestigungs-Klaue (44) vorgesehen ist, an dem umfangsmäßig an dem Rührstab-Einschiebebereich (52) angrenzenden Enden des Kruken-Befestigungsfortsatz-Klauenbefestigungsbereichs jeweils ein vorderer Innengewindebereich (60) ansetzt, und wobei von diesen vorderen Innengewindebereichen (60) zwei gewindefreie Innenflächen-Zwischenbereiche (61) und ein hinterer, dem Rührstab-Einschiebebereich (52) gegenüber liegender Innengewindebereich (60) eingeschlossen sind.

14. Apotheken-Rezepturherstellungs-Vorrichtung (2) zum Herstellen eines pharmazeutischen Individual-Produkts, insbesondere von pharmazeutischen IndividualProdukten, wie Rezepturen für Salben, halbfeste Zubereitungen, Pasten, Cremes, Gelen, Emulsionen, Augentropfen, Tinkturen, Tabletten, Kapseln oder Tees, aufweisend:
eine Standeinheit (4) mit einem Sockelbereich (6), und einem Kopfbereich (10), und einem den Sockelbereich (6) mit dem Kopfbereich (10) verbindenden Mittelbereich (8), wobei sich der Kopfbereich (10) über den Mittelbereich (8) nach vorne erstreckt;
eine an dem Mittelbereich (8) angeordnete und nach oben und nach unten bewegbare Hubeinheit (12) mit einem sich im Wesentlichen in horizontaler Richtung nach vorne erstreckenden Apotheken-Rezepturherstellungs-Vorrichtungs-Hubarm (56) nach einem der Ansprüche 9 bis 13;
eine in oder an dem Kopfbereich (10) angeordnete, motorisch antreibbare Rühreinheit (20) mit einem sich von dem Kopfbereich (10) nach unten erstreckenden Rührstab (22), an dessen unterem Ende ein Rührwerkzeug (24) anbringbar oder angeordnet ist; und
eine Steuereinheit, die so ausgebildet ist, dass die Rühreinheit (20) motorisch antreibbar ist und/oder dass die Hubeinheit (12) nach oben und nach unten verfahrbar ist.

## Claims

1. A pharmacy formulation preparation crock lid (34) or pharmacy formulation preparation crock bottom of a pharmacy formulation preparation crock (31) for preparing an individual pharmaceutical product in a pharmacy, wherein the pharmacy formulation preparation crock lid (34) or pharmacy formulation preparation crock bottom is adapted for quick and detachable screw-fastening to a pharmacy formulation preparation device lifting arm (56) for a pharmacy formulation preparation device (2) for preparing an individual pharmaceutical product, comprising:
a lid plate (35) or a bottom plate, respectively,
wherein the lid plate (35) or the bottom plate, respectively, comprises a substantially cylindrical fastening extension (36), hollow on the inside, extending from the lid plate (35) upwards or from the bottom plate downwards, respectively, and allowing access to the region of the pharmacy formulation preparation crock (31) located below the lid plate (35) or above the bottom plate, respectively, for detachably fastening the pharmacy formulation preparation crock lid (34) to a lifting arm of the pharmacy formulation preparation device (2),
**characterized in that**
the fastening extension (36) comprises on its outer surface (84) at least two outer thread regions (54) spaced apart from one another in the circumferential direction;
the pharmacy formulation preparation crock lid (34) or pharmacy formulation preparation crock bottom further comprises a positioning marker (78) on the upper side of the lid plate (35) or on the lower side of the bottom plate, respectively, for specifying the rotational insertion position of the pharmacy formulation preparation crock lid (34) or the pharmacy formulation preparation crock bottom with respect to a pharmacy formulation preparation device lifting arm (56).

2. The pharmacy formulation preparation crock lid (34) or pharmacy formulation preparation crock bottom according to claim 1, wherein the outer thread regions each comprise a plurality, in particular 2 to 10, of thread walls arranged, in the axial direction, equidistantly on top of one another with the same inclination.

3. The pharmacy formulation preparation crock lid or pharmacy formulation preparation crock bottom according to claim 1 or 2, wherein a threadless outer surface intermediate region (55) is each arranged between two outer thread regions (54) spaced apart from one another in the circumferential direction; and/or
comprising three outer thread regions (54) spaced apart from one another in the circumferential direction, each having threadless outer surface intermediate regions arranged therebetween; and/or
wherein the outer thread regions (54) each take up an angle area of 10 to 90°, in particular 50 to 70°; and/or
wherein at least one of the outer thread regions (54) comprises at least one circumferentially centered outer thread region section and two outer thread region sections circumferentially adjoining them on both sides in the circumferential direction.

4. The pharmacy formulation preparation crock lid or pharmacy formulation preparation crock bottom according to claim 3, wherein; and
wherein at least one thread wall has, in the circumferentially centered outer thread region section, a continuous height, measured radially to the curved plane of the outer surface of the fastening extension or to the thread bottom; and/ or
wherein the height of the thread walls in the circumferentially outer outer thread region sections, decreases, measured radially to the curved plane of the outer surface of the fastening extension or to the thread bottom, from the circumferentially inner end facing the center outer thread region section towards the circumferentially outer end of the respective outer outer thread region section, and in particular decreases such that the circumferentially outer end of the respective outer outer thread region section transitions into the curved plane of the outer surface of the fastening extension, and/or the height thereof, measured radially to the curved plane of the outer surface of the fastening extension, is zero.

5. The pharmacy formulation preparation crock lid (34) or pharmacy formulation preparation crock bottom according to one of the previous claims, wherein at least one of the outer thread regions (54) comprises at least one thread wall having a continuous height, measured radially to the curved plane of the outer surface of the fastening extension or to the thread bottom, and/or
wherein one outer thread region is adapted as a pair of two outer thread region segments interrupted in the circumferential direction.

6. The pharmacy formulation preparation crock lid (34) or pharmacy formulation preparation crock bottom according to any one of claims 3 to 5, wherein the threadless outer surface intermediate regions are adapted in the shape of cylinder segments or have a curved shape, in a radial cross-section, or wherein the threadless outer surface intermediate regions (55) each form a plane extending parallel to the longitudinal axis of the fastening extension (36), which plane connects the circumferentially outer ends of respectively neighboring outer thread regions (54).

7. The pharmacy formulation preparation crock lid (34) or pharmacy formulation preparation crock bottom according to one of the previous claims, wherein the outer thread regions (54) are, in the circumferential direction, each arranged equidistantly with respect to each other and each take up angle areas of equal size, or wherein one outer thread region (54) takes up, in the circumferential direction, a smaller angle area than at least one further outer thread region (54); and/or
further comprising a circumferential lid edge (64) extending downwards from the lid plate (35) and having an inner thread for being screw-fastened to a pharmacy formulation preparation crock container (32), or a circumferential bottom edge extending upwards from the bottom plate and having an inner thread for being screw-fastened to a pharmacy formulation preparation crock container (32).

8. The pharmacy formulation preparation crock lid (34) or pharmacy formulation preparation crock bottom according to one of claims 1 to 7, wherein the fastening extension (36) comprises a lower substantially cylindrical fastening region and an upper substantially cylindrical base region having a larger diameter, wherein at the transition between the upper base region and the lower fastening region, a stopping surface (72), in particular of an annular shape, facing downwards, is formed, which forms a stopper for a stopping surface (58) of a crock fastening extension fastening region (30); and/or wherein the lower fastening region comprises on its outer surface at least two outer thread regions (54) spaced apart from one another in the circumferential direction; and/or
wherein the lower substantially cylindrical fastening region comprises, on its side facing down, a stopping face, in particular of an annular shape, which forms a stopper for a screw-in limiting surface of a screw-in limiting region.

9. A pharmacy formulation preparation device lifting arm (56) for a pharmacy formulation preparation device (2) for preparing an individual pharmaceutical product, wherein the pharmacy formulation preparation device lifting arm (56) is adapted for quickly and detachably screw-fastening thereto a pharmacy formulation preparation crock lid (34) according to one of the claims 1 to 8,
comprising:
a substantially longitudinal basic body having a crock fastening extension fastening region (48) for a fastening extension (36) of a pharmacy formulation preparation crock lid (34), a pharmacy formulation preparation crock bottom, a pharmacy formulation preparation crock adapter or a pharmacy formulation preparation crock (31) provided at or close to the longitudinal front end of the basic body;
wherein the crock fastening extension fastening region (48) is adapted as a recess extending from the lower side to the upper side of the basic body;
**characterized in that**
the crock fastening extension fastening region (48) comprises, on its inner surface, at least two inner thread regions (50) spaced apart from one another in the circumferential direction; and
the pharmacy formulation preparation device lifting arm (56) comprising a removal position indication pin extending from the lower side of the lifting arm downwards in the vertical direction

10. The pharmacy formulation preparation device lifting arm (56) according to claim 9, wherein the inner thread regions each comprise a plurality of, in particular 2 to 10, thread walls arranged, in the axial direction, equidistantly on top of one another with the same inclination; and/or
wherein the crock fastening extension fastening region (48) has a substantially cylindrical form; and/or
wherein the removal position indication pin extends from the lower side of the lifting arm up to 4 mm downwards in the vertical direction; and/or
wherein the removal position indication pin is provided radially close to the crock fastening extension fastening region (48) such that, during the process of quick-fastening a crock lid (34) or a crock bottom with the crock fastening extension fastening region (48), the removal position indication pin is arranged between the lid plate of the crock lid (34) or the bottom plate of the crock bottom and the lower side of the pharmacy formulation preparation device lifting arm (56); and/or
wherein the crock fastening extension fastening region (48) comprises an upper substantially cylindrical recess region (102) and a lower substantially cylindrical recess region (104) having a larger diameter, wherein at a transition between the lower and the upper substantially cylindrical recess region, a stopping surface (106), in particular of an annular shape, facing downwards is provided, which forms a stopper for a stopping surface (72) of the fastening extension (36) of the pharmacy formulation preparation crock lid (34), the pharmacy formulation preparation crock bottom or the pharmacy formulation preparation crock adapter; and/or wherein the upper recess region comprises, on its inner surface, at least two inner thread regions (60) spaced apart from one another in the circumferential direction; and/or
wherein the crock fastening extension fastening region (48) comprises, at the upper end of the upper substantially cylindrical recess region, a screw-in limiting region having a smaller inner diameter than the inner diameter of the inner thread region; and/or wherein the screw-in limiting region forms a screw-in limiting surface on its lower side towards the lower substantially cylindrical recess region; and/or wherein the screw-in limiting surface forms a stopper for the stopping surface of the fastening extension (36).

11. The pharmacy formulation preparation device lifting arm (28) according to one of the claims 9 or 10, further comprising a fastening claw (44) having two claw extensions (46), the fastening claw (44) comprising the crock fastening extension fastening region, which is formed as a recess extending from the lower side to the upper side of the basic body and extends from the longitudinal front end of the basic body to the crock fastening extension fastening region (48).

12. The pharmacy formulation preparation device lifting arm (28) according to one of one of claims 9 to 11, wherein at least one of the inner thread regions (60) comprises a circumferentially centered inner thread region section and two outer inner thread region sections circumferentially adjoining them on both sides in the circumferential direction;
wherein particularly the height of the thread walls in the circumferentially outer inner thread region sections decreases, measured radially to the curved plane of the inner surface of the crock fastening extension fastening region (48) or to the thread bottom, from the circumferentially inner end facing the center inner thread region section towards the circumferentially outer end of the respective outer inner thread region section and, in particular, decreases such that the circumferentially outer end of the respective outer inner thread region section transitions into the curved plane of the inner surface of the crock fastening extension fastening region (48), and/or that the height thereof, measured radially to the curved plane of the inner surface of the crock fastening extension fastening region (48), is zero.

13. The pharmacy formulation preparation device lifting arm (28) according to claim 11 or 12, wherein, if a fastening claw (44) is provided, a front inner thread region (60) extends from each of the ends of the crock fastening extension fastening region circumferentially adjacent to the agitating stick insertion region (52), and wherein these front inner thread regions (60) enclose two threadless inner surface intermediate regions (61) and one rear inner thread region (60) arranged opposite the agitating stick insertion region (52).

14. A pharmacy formulation preparation device (2) for preparing an individual pharmaceutical product, in particular individual pharmaceutical products such as formulations for ointments, semisolid preparations, pastes, creams, gels, emulsions, eye drops, tinctures, pills, capsules or teas, comprising:
a stand unit (4) having a base region (6) and a head region (10) and a center region (8) connecting the base region (6) with the head region (10), the head region (10) extending over the center region (8) towards the front;
a lifting unit (12) arranged on the center region (8) and being movable upwards and downwards and having a pharmacy formulation preparation device lifting arm (56) according to one of the claims 9 to 13 extending substantially in the horizontal direction to the front;
an agitating unit (20) arranged within or on the head region (10), which can be driven by a motor and has an agitating stick (22) extending from the head region (10) downwards, wherein an agitating tool (24) is attached or can be attached to the lower end of the agitating stick (22); and
a control unit adapted such that the agitating unit (20) can be driven by a motor and/or that the lifting unit (12) can be displaced upwards and downwards.

## Revendications

1. Couvercle à visser (34) pour un petit pot destiné à la préparation d'une ordonnance pharmaceutique ou base pour un petit pot destiné à la préparation d'une ordonnance pharmaceutique d'un petit pot (31) destiné à la préparation d'une ordonnance pharmaceutique à des fins de préparation d'un produit individuel pharmaceutique dans une pharmacie ; dans lequel le couvercle à visser (34) pour un petit pot destiné à la préparation d'une ordonnance pharmaceutique ou la base pour un petit pot destiné à la préparation d'une ordonnance pharmaceutique est réalisé(e) à des fins de la fixation rapide amovible par l'intermédiaire d'un vissage à un bras de levage (56) d'un dispositif destiné à la préparation d'une ordonnance pharmaceutique pour un dispositif (2) destiné à la préparation d'une ordonnance pharmaceutique à des fins de préparation d'un produit individuel pharmaceutique, qui présente :
une plaque de recouvrement (35), respectivement une plaque de fond ;
dans lequel la plaque de recouvrement (35), respectivement la plaque de fond présente un prolongement de la fixation (36), essentiellement de forme cylindrique, s'étendant vers le haut à partir de la plaque de recouvrement (35) respectivement s'étendant vers le bas à partir de la plaque de fond, et possédant un intérieur creux, qui permet d'accéder à la zone du petit pot (31) destiné à la préparation d'une ordonnance pharmaceutique, la zone en question étant située en dessous de la plaque de recouvrement (35), respectivement au-dessus de la plaque de fond, à des fins de fixation amovible du couvercle à visser (34) pour un petit pot destiné à la préparation d'une ordonnance pharmaceutique à un bras de levage du dispositif (2) destiné à la préparation d'une ordonnance pharmaceutique ;
**caractérisé en ce que**
le prolongement de la fixation (36) présente, sur sa surface externe (84), au moins deux zones (54) munies de filets de vis externes, qui sont disposées à distance l'une de l'autre dans la direction circonférentielle ;
et **en ce que** le couvercle à visser pour un petit pot destiné à la préparation d'une ordonnance pharmaceutique ou la base pour un petit pot destiné à la préparation d'une ordonnance pharmaceutique présente en outre un repère de positionnement (78) sur le côté supérieur de la plaque de recouvrement (35) respectivement sur le côté inférieur de la plaque de fond, dans le but d'indiquer la position d'introduction en rotation du couvercle à visser (34) pour un petit pot destiné à la préparation d'une ordonnance pharmaceutique ou de la base pour un petit pot destiné à la préparation d'une ordonnance pharmaceutique par rapport à un bras de levage (56) d'un dispositif destiné à la préparation d'une ordonnance pharmaceutique.

2. Couvercle à visser (34) pour un petit pot destiné à la préparation d'une ordonnance pharmaceutique ou base pour un petit pot destiné à la préparation d'une ordonnance pharmaceutique selon la revendication 1, dans lequel les zones (54) munies de filets de vis externes présentent respectivement plusieurs, en particulier de 2 à 10 parois de filet de vis disposées en position équidistante les unes par-dessus les autres, lorsqu'on regarde dans la direction axiale, qui possèdent la même inclinaison.

3. Couvercle à visser (34) pour un petit pot destiné à la préparation d'une ordonnance pharmaceutique ou base pour un petit pot destiné à la préparation d'une ordonnance pharmaceutique selon la revendication 1 ou 2, dans lequel, entre respectivement deux zones (54) munies de filets de vis externes disposées à l'écart l'une de l'autre dans la direction circonférentielle, est disposée une zone intermédiaire (55) dont la surface externe est exempte de filet de vis ; et/ou présentant trois zones (54) munies de filets de vis externes disposées à l'écart l'une de l'autre dans la direction circonférentielle qui comprennent des zones intermédiaires (55) dont les surfaces externes sont exemptes de filets de vis, qui sont disposées respectivement entre les trois zones précitées ; et/ou dans lequel les zones (54) munies de filets de vis externes représentent respectivement une ampleur angulaire de 10 à 90°, en particulier de 50 à 70° ; et/ou dans lequel au moins une des zones (54) munies de filets de vis externes présente un tronçon de la zone munie de filet de vis externe, médian dans la direction circonférentielle et deux tronçons de la zone munie d'un filet de vis externe, externes dans la direction circonférentielle, qui viennent s'y raccorder des deux côtés dans la direction circonférentielle.

4. Couvercle à visser (34) pour un petit pot destiné à la préparation d'une ordonnance pharmaceutique ou base pour un petit pot destiné à la préparation d'une ordonnance pharmaceutique selon la revendication 3, dans lequel au moins une paroi de filet de vis dans le tronçon de la zone munie d'un filet de vis externe, médian dans la direction circonférentielle, présente une hauteur constante, telle qu'on la mesure dans la direction radiale par rapport au plan incurvé de la surface externe du prolongement de la fixation ou par rapport à la base du pas de filet de vis ; et/ou dans lequel la hauteur des parois de filets de vis dans les tronçons de la zone munie d'un filet de vis externe, externes dans la direction circonférentielle, lorsqu'on procède à la mesure dans la direction radiale par rapport au plan incurvé de la surface externe du prolongement de la fixation ou par rapport à la base du pas de filet de vis, diminue depuis l'extrémité interne dans la direction circonférentielle, orientée dans la direction du tronçon de la zone munie d'un filet de vis externe, médian dans la direction circonférentielle, en direction de l'extrémité externe, du tronçon externe respectif de la zone munie d'un filet de vis, et en particulier diminue d'une manière telle que l'extrémité externe dans la direction circonférentielle du tronçon externe respectif de la zone munie d'un filet de vis externe se transforme pour former le plan incurvé de la surface externe du prolongement de la fixation et/ou d'une manière telle que sa hauteur, lorsqu'on la mesure dans la direction radiale par rapport au plan incurvé de la surface externe du prolongement de la fixation, est nulle.

5. Couvercle à visser (34) pour un petit pot destiné à la préparation d'une ordonnance pharmaceutique ou base pour un petit pot destiné à la préparation d'une ordonnance pharmaceutique selon l'une quelconque des revendications précédentes, dans lequel au moins une des zones (54) munies de filets de vis externes présente au moins une paroi de filet de vis qui possède une hauteur constante, lorsqu'on la mesure dans la direction radiale par rapport au plan incurvé de la surface externe du prolongement de la fixation ou par rapport à la base du pas de filet de vis ; et/ou dans lequel une zone (54) munie d'un filet de vis externe est réalisée sous la forme d'une paire de deux segments d'une zone munie d'un filet de vis externe, qui sont interrompus dans la direction circonférentielle.

6. Couvercle à visser (34) pour un petit pot destiné à la préparation d'une ordonnance pharmaceutique ou base pour un petit pot destiné à la préparation d'une ordonnance pharmaceutique selon l'une quelconque des revendications 3 à 5, dans laquelle les zones intermédiaires de la surface externe exempte de filet de vis sont réalisées sous la forme de segments cylindriques ou sous une forme incurvée, lorsqu'on regarde dans une vue en coupe transversale radiale ; ou dans lequel les zones intermédiaires (55) des surfaces externes exemptes de filets de vis forment respectivement un plan qui s'étend en parallèle par rapport à l'axe longitudinal du prolongement de la fixation (36), plan qui relie les unes aux autres les extrémité externes dans la direction circonférentielle de zones respectivement voisines (54) munies de filets de vis externes.

7. Couvercle à visser (34) pour un petit pot destiné à la préparation d'une ordonnance pharmaceutique ou base pour un petit pot destiné à la préparation d'une ordonnance pharmaceutique selon l'une quelconque des revendications précédentes, dans lequel les zones (54) munies de filets de vis externes sont disposées, de manière respective, lorsqu'on regarde dans la direction circonférentielle, dans des positions réciproquement équidistantes et représentent respectivement des ampleurs angulaires de dimensions égales ; ou dans lequel une zone (54) munie d'un filet de vis externe, lorsqu'on regarde dans la direction circonférentielle, représente une ampleur angulaire qui est inférieure à celle d'au moins une zone supplémentaire (54) munie d'un filet de vis externe; et/ou qui présente en outre un bord de couvercle périphérique (64) qui s'étend vers le bas à partir de la plaque de recouvrement (35), qui comprend un filet de vis interne, destiné à la fixation par vissage à un récipient (32) sous la forme d'un petit pot destiné à la préparation d'une ordonnance pharmaceutique, respectivement un bord périphérique de base qui s'étend vers le haut à partir de la plaque de fond, qui comprend un filet de vis interne, à des fins de fixation par vissage à un récipient (32) d'un petit pot destiné à la préparation d'une ordonnance pharmaceutique.

8. Base pour un petit pot destiné à la préparation d'une ordonnance pharmaceutique selon l'une quelconque des revendications 1 à 7, dans laquelle le prolongement de la fixation (36) présente une zone de fixation inférieure qui possède essentiellement une forme cylindrique et une zone supérieure faisant office de socle, essentiellement de forme cylindrique, dont le diamètre est supérieur ; dans laquelle, à la transition entre la zone supérieure faisant office de socle et la zone de fixation inférieure, est réalisée une surface de butée (72), en particulier de forme annulaire, orientée vers le bas, qui forme une butée pour une surface de butée (58) d'une zone de fixation (30) du prolongement de la fixation du petit pot ; et/ou dans laquelle la zone de fixation inférieure présente, sur sa surface externe, au moins deux zones (54) munies de filets de vis externes, qui sont disposées à l'écart l'une de l'autre dans la direction circonférentielle ; et/ou dans laquelle la zone de fixation inférieure qui possède essentiellement une forme cylindrique présente, sur son côté orienté vers le bas, une surface de butée, en particulier de forme annulaire, qui forme une butée pour une surface de délimitation de vissage d'une zone de délimitation de vissage.

9. Bras de levage (56) d'un dispositif destiné à la préparation d'une ordonnance pharmaceutique, pour un dispositif (2) destiné à la préparation d'une ordonnance pharmaceutique à des fins de préparation d'un produit individuel pharmaceutique ;
dans lequel le bras de levage (56) du dispositif destiné à la préparation d'une ordonnance pharmaceutique est conçu à des fins d'une fixation rapide amovible par vissage d'un couvercle à visser (34) pour un petit pot destiné à la préparation d'une ordonnance pharmaceutique ou d'une base pour un petit pot destiné à la préparation d'une ordonnance pharmaceutique d'un petit pot selon l'une quelconque des revendications 1 à 8 ;
qui présente :
un corps de base essentiellement de forme oblongue qui comprend une zone de fixation (48) du prolongement de la fixation du petit pot que l'on prévoit contre ou à proximité de l'extrémité longitudinale avant du corps de base pour un prolongement de la fixation (36) d'un couvercle à visser (34) pour un petit pot destiné à la préparation d'une ordonnance pharmaceutique, d'une base pour un petit pot destiné à la préparation d'une ordonnance pharmaceutique, d'un adaptateur pour un petit pot destiné à la préparation d'une ordonnance pharmaceutique ou d'un petit pot (31) destiné à la préparation d'une ordonnance pharmaceutique ;
dans lequel la zone de fixation (48) du prolongement de la fixation du petit pot est réalisée sous la forme d'un évidement qui s'étend à partir du côté inférieur jusqu'au côté supérieur du corps de base ;
**caractérisé en ce que**
la zone de fixation (48) du prolongement de la fixation du petit pot présente, contre sa surface interne, au moins deux zones (50) munies de filets de vis internes, qui sont disposées à l'écart l'une de l'autre dans la direction circonférentielle ; et
le bras de levage du dispositif destiné à la préparation d'une ordonnance pharmaceutique présente un ergot de référence d'une position de préhension, qui s'étend vers le bas dans la direction verticale à partir du côté inférieur du bras de levage.

10. Bras de levage (56) d'un dispositif destiné à la préparation d'une ordonnance pharmaceutique selon la revendication 9, dans lequel les zones qui sont munies de filets de vis internes présentent respectivement plusieurs, en particulier de 2 à 10 parois de filets de vis disposées les unes par-dessus les autres en position équidistante, lorsqu'on regarde dans la direction axiale, qui possèdent une inclinaison égale ; et/ou dans lequel la zone de fixation (48) du prolongement de la fixation du petit pot possède une configuration essentiellement de forme cylindrique ; et/ou dans lequel l'ergot de référence de la position de préhension s'étend vers le bas à partir du côté inférieur du bras de levage jusqu'à une distance de 4 mm dans la direction verticale; et/ou dans lequel l'ergot de référence de la position de préhension est disposé à proximité de la zone de fixation (48) du prolongement de la fixation du petit pot, dans la direction radiale, à une distance telle que la zone en question, dans le cas d'une fixation rapide d'un couvercle de petit pot à visser (34) ou d'une base de petit pot dans la zone de fixation (48) du prolongement de la fixation du petit pot se situe entre la plaque de recouvrement du couvercle à visser (34) du petit pot ou entre la plaque de fond de la base du petit pot et le côté inférieur du bras de levage (56) du dispositif destiné à la préparation d'une ordonnance pharmaceutique ; et/ou dans lequel la zone de fixation (48) du prolongement de la fixation du petit pot présente une zone supérieure en forme d'évidement (102), possédant une configuration essentiellement de forme cylindrique, et une zone inférieure en forme d'évidement (104), possédant une configuration essentiellement de forme cylindrique, dont le diamètre est supérieur; dans lequel, à la transition entre la zone inférieure et la zone supérieure en forme d'évidement possédant une configuration essentiellement de forme cylindrique, est réalisée une surface de butée (106), en particulier de forme annulaire, orientée vers le bas, qui forme une butée pour une surface de butée (72) du prolongement de la fixation (36) du couvercle à visser (34) pour un petit pot destiné à la préparation d'une ordonnance pharmaceutique, de la base pour un petit pot destiné à la préparation d'une ordonnance pharmaceutique ou de l'adaptateur pour un petit pot destiné à la préparation d'une ordonnance pharmaceutique ; et/ou dans lequel la zone supérieure en forme d'évidement présente, contre sa surface interne, au moins deux zones (60) munies de filets de vis internes, qui sont disposées à distance l'une de l'autre dans la direction circonférentielle ; et/ou dans lequel la zone de fixation (48) du prolongement de la fixation du petit pot présente, à l'extrémité supérieure de la zone supérieure en forme d'évidement, possédant une configuration essentiellement de forme cylindrique, une zone de délimitation de vissage, qui présente un diamètre interne qui est inférieur au diamètre interne de la zone munie d'un filet de vis interne ; et/ou dans lequel la zone de délimitation du vissage forme une surface de délimitation de vissage sur son côté inférieur dans la direction de la zone inférieure en forme d'évidement, possédant une configuration essentiellement de forme cylindrique ; et/ou dans lequel la surface de délimitation du vissage forme une butée pour la surface de butée du prolongement de la fixation (36).

11. Bras de levage (56) d'un dispositif destiné à la préparation d'une ordonnance pharmaceutique selon l'une quelconque des revendications 9 ou 10, qui présente en outre une mâchoire de fixation (44) qui comprend deux extensions de mâchoire (46) ; dans lequel la mâchoire de fixation (44) présente une zone de fixation par mâchoire du prolongement de la fixation du petit pot, qui est réalisée sous la forme d'un évidement qui s'étend à partir du côté inférieur jusqu'au côté supérieur du corps de base et qui s'étend à partir de l'extrémité longitudinale avant du corps de base jusqu'à la zone de fixation (48) de l'extension de fixation du petit pot.

12. Bras de levage (56) d'un dispositif destiné à la préparation d'une ordonnance pharmaceutique selon l'une quelconque des revendications 9 à 11, dans lequel au moins une des zones (60) munie d'un filet de vis interne présente un tronçon de la zone munie d'un filet de vis interne, médian dans la direction circonférentielle, et deux tronçons de la zone munie d'un filet de vis interne, externes dans la direction circonférentielle, qui viennent s'y raccorder des deux côtés dans la direction circonférentielle ;
dans lequel, en particulier, la hauteur des parois de filets de vis dans les tronçons de la zone munie d'un filet de vis interne, externes dans la direction circonférentielle, lorsqu'on effectue la mesure dans la direction radiale par rapport au plan incurvé de la surface interne de la zone de fixation (48) du prolongement de la fixation du petit pot ou par rapport à la base du pas de vis, diminue depuis l'extrémité interne dans la direction circonférentielle, orientée dans la direction du tronçon de la zone munie d'un filet de vis interne, en direction de l'extrémité externe, médian dans la direction circonférentielle dans la direction circonférentielle, du tronçon externe respectif de la zone munie d'un filet de vis interne, et en particulier diminue d'une manière telle que l'extrémité externe dans la direction circonférentielle du tronçon externe respectif de la zone munie d'un filet de vis interne se transforme pour obtenir le plan incurvé de la surface interne de la zone de fixation (48) du prolongement de la fixation du petit pot ; et/ou d'une manière telle que sa hauteur, lorsqu'on la mesure dans la direction radiale par rapport au plan incurvé de la surface interne de la zone de fixation (48) du prolongement de la fixation du petit pot, est nulle.

13. Bras de levage (28) d'un dispositif destiné à la préparation d'une ordonnance pharmaceutique selon la revendication 11 ou 12, dans lequel, dans le cas où l'on prévoit une mâchoire de fixation (44), respectivement une zone avant (60) munie d'un filet de vis interne vient se placer, dans la direction circonférentielle, contre ladite mâchoire, contre les extrémités de la zone de fixation sous la forme d'une mâchoire du prolongement de la fixation du petit pot, limitrophes, à la zone d'insertion (52) d'une tige d'agitation ; et dans lequel deux zones intermédiaires (61) des surfaces internes qui sont exemptes de filets de vis et une zone arrière (60) munie d'un filet de vis interne, qui est disposée face à la zone d'insertion (52) de la tige d'agitation, sont entourées par ces zones avant (60) munies de filets de vis internes.

14. Dispositif (2) destiné à la préparation d'une ordonnance pharmaceutique, à des fins de préparation d'un produit individuel pharmaceutique, en particulier de produits individuels pharmaceutiques, comme par exemple des ordonnances pour des pommades, des préparations semi-solides, des pâtes, des crèmes, des gels, des émulsions, des gouttes ophtalmiques, des teintures, des comprimés, des capsules ou des thés, qui présente :
une unité faisant office de bâti (4) qui comprend une zone (6) faisant office de socle et une zone (10) faisant office de tête, ainsi qu'une zone médiane (8) qui relie la zone (6) faisant office de socle à la zone (10) faisant office de tête ; dans lequel la zone (10) faisant office de tête s'étend vers l'avant au-delà de la zone médiane (8) ;
une unité de levage (12) disposée contre la zone médiane (8) et apte à effectuer un mouvement vers le bas et vers le haut, qui comprend un bras de levage (56) du dispositif destiné à la préparation d'une ordonnance pharmaceutique qui s'étend vers l'avant essentiellement dans la direction horizontale, selon l'une quelconque des revendications 9 à 13 ;
une unité d'agitation (20) qui peut être entraînée par un moteur, et qui est disposée dans contre la zone (10) faisant office de tête, qui comprend une tige d'agitation (22) qui s'étend vers le bas à partir de la zone (10) faisant office de tête, un ustensile d'agitation (24) étant disposé ou pouvant venir s'appliquer contre l'extrémité inférieure de ladite tige ; et
une unité de commande qui est réalisée d'une manière telle que l'unité d'agitation (20) peut être entraînée à l'aide d'un moteur et/ou en ce que l'unité de levage (12) peut effectuer des déplacements vers le haut et vers le bas.
